# EUROPÄISCHE PATENTSCHRIFT

(11) **EP 3 627 800 B1**
(45) Veröffentlichungstag und Bekanntmachung des Hinweises auf die Patenterteilung: **27.12.2023**
(21) Anmeldenummer: 19197210.8
(22) Anmeldetag: 13.09.2019
(51) Int. Cl.: G05B 19/418, H04L 67/12, H04L 67/55, H04L 67/63

(54) **PUBLISH-/SUBSCRIBE-KOMMUNIKATION VON MASCHINENSTEUERUNGSDATEN**
PUBLISH/SUBSCRIBE COMMUNICATION OF MACHINE CONTROL DATA
COMMUNICATION PUBLICATION/ABONNEMENT DE DONNÉES DE COMMANDE DE MACHINES

(30) Priorität: 21.09.2018 DE 102018216111
(43) Veröffentlichungstag der Anmeldung: 25.03.2020
(73) Patentinhaber: Robert Bosch GmbH, 70442 Stuttgart (DE)
(72) Erfinder: Eckhardt, Andreas, 64756 Mossautal-Guettersbach (DE); Mueller, Sebastian, 64385 Reichelsheim (DE)

(56) Entgegenhaltungen:
- Opc Fopundation: "OPC Unified Architecture Specification Part 14: PubSub Release 1.04", , 6. Februar 2018 (2018-02-06), XP055522628, Gefunden im Internet: URL:https://opcfoundation.org/developer-to ols/specifications-unified-architecture/pa rt-14-pubsub [gefunden am 2018-11-09]
- OPC FOUNDATION: "OPC Unified Architecture Specification Part:1 Overview and Concepts, Release 1.01", 20090205 , Nr. Release 1.01 5. Februar 2009 (2009-02-05), Seiten 1-28, XP002630848, Gefunden im Internet: URL:https://www.opcfoundation.org/Download s.aspx/UnifiedArchitecture/OPCUAPart1-Over viewandConcepts1.01Specification.zip?RI=41 4 [gefunden am 2011-03-31]
- Anonymous: "OPC UA Configuration Manager Help", , 1. Januar 2014 (2014-01-01), XP055657568, Gefunden im Internet: URL:https://www.kepware.com/getattachment/ d9b5a73e-90f8-456c-8c15-afad097a160e/opc-u a-configuration-manager-manual.pdf [gefunden am 2020-01-13]
- Power Liam ET AL: "Keys To Developing an Embedded UA Server", , 1 January 2013 (2013-01-01), pages 1-7, XP055852515, Retrieved from the Internet: URL:https://opcfoundation.org/wp-content/u ploads/2015/03/Keys-To-Developing-an-Embed ded-UA-Server_Whitepaper_EN.pdf [retrieved on 2021-10-19]

## Beschreibung

Die vorliegende Erfindung betrifft ein Verfahren nach dem Oberbegriff des Anspruchs 1.

Bei dem eingangs genannten Verfahren werden im Stand der Technik Maschinensteuerungsdaten eines mechatronischen Systems in einem Netzwerk mit zumindest einem Netzwerkteilnehmer kommuniziert, der die Steuerungsdaten mittels eines Datenaustauschstandards, der ein Publish-/Subscribe-Kommunikationsmodell unterstützt, über das Netzwerk sendet (Publisher). Zumindest ein weiterer Netzwerkteilnehmer empfängt die Steuerungsdaten mittels des Datenaustauschstandards über das Netzwerk (Subscriber; auch austauschbar als Bezieher oder Subskribent bezeichnet), wobei der Publisher die Übertragung in Form von Netzwerknachrichten vornimmt, die jeweils für bedarfsweise auswählbare, vom Publisher entkoppelte Subscriber vorgesehen sind. Der Subscriber erhält die Netzwerknachricht mit seinen zu beziehenden Steuerungsdaten, jeweils vorzugsweise ereignisgesteuert, selektiv oder wählt diese aus und/oder entnimmt die zu beziehenden Steuerungsdaten aus einer Netzwerknachricht selektiv. Ein solches Verfahren wird auch als Publish-/Subscribe-Kommunikationsverfahren oder ein Publish-/Subscribe-Kommunikationsmodell bezeichnet. Es ist beispielsweise für die Übertragung von Daten eines Buscontrollers in einem industriellen Automatisierungssystem vorgesehen, der dazu als Publisher ausgebildet ist.

Die Veröffentlichung OPC Foundation: "OPC Unified Architecture Specification Part 14: PubSub Release 1.04", 6. Februar 2018, beschreibt ein Publish-/Subscribe-Kommunikationsmodell im Rahmen der Spezifikation OPC Foundation: "OPC Unified Architecture Specification Part: 1 Overview and Concepts Release 1.01", 5. Februar 2009 (vgl. https://www.opcfoundation.org).

Ein solches Verfahren bietet aufgrund der entkoppelten Kommunikation einfache Strukturen. Es benötigt zumindest einen Publisher und einen Subscriber. Dadurch ist es strukturell und apparativ aber eingeschränkt, wenig flexibel im Hinblick auf die Systemkonfiguration und für die industrielle Automatisierung nur eingeschränkt geeignet.

Es ist daher Aufgabe der vorliegenden Erfindung, ein einfaches, schnelles und robustes Kommunikationsverfahren bereitzustellen, vorzugsweise flexibel einsetzbar zu gestalten und insbesondere für anspruchsvolle Automatisierungsaufgaben zu befähigen. Insbesondere soll ein Kommunikationsverfahren befähigt werden, eine flexibel konfigurierbare, mechatronische Systemumgebung systemtreu abzubilden. Des Weiteren soll durch ein erfindungsgemäßes Kommunikationsverfahren eine autarke Funktionalität der Maschinensteuerung erreicht werden, insbesondere die Maschinensteuerung für flexible Systemumgebungen - insbesondere bei der Industrieautomatisierung - interoperabel in ein solches System eingebunden werden.

Diese Aufgabe wird gelöst durch ein Verfahren nach Anspruch 1. Es ist eine Erkenntnis der Erfindung, dass eine flexibel als Subscriber und Publisher konfigurierbare Maschinensteuerung, die - insbesondere bidirektionale - Kodierungsfähigkeiten nach dem etablierten Datenaustauschstandard bereits mitbringt, die Vorteile der Publish-/Subscribe-Kommunikationsarchitektur für eine Vielzahl von Automatisierungsaufgaben erschließt. Gleichzeitig wird ein hohes Maß an Flexibilität der Systemkonfiguration ermöglicht - wie zum Beispiel eine Umkonfiguration von Steuerungen, die Unterstützung einer Mehrzahl bis Vielzahl von Steuerungen, die Ein- und Ausbindung von Maschinensteuerungen in ein bzw. aus einem Kommunikationsnetzwerk sowie die Maschinensteuerung für asynchrone Kommunikation und für Echtzeit-Kommunikation gleichermaßen zu befähigen und kompatibel auszugestalten.

Durch die erfindungsgemäß gezielt ausgewählte Verwendung von Mechanismen des Datenaustauschstandards wird dies bei einem hohen Maß an Interoperabilität erreicht. Die Erfindung realisiert eine generische Funktionalität auf dem Laufzeitsystem einer Maschinensteuerung, so dass die Steuerung frei konfigurierbar wird mit einem Datenaustauschstandard mit einem hohen Maß an Interoperabilität; zudem wird die Maschinensteuerung zur autarken, frei konfigurierbaren Netzwerkinfrastruktur und zur Netzwerkkommunikation befähigt, indem sie die für die Netzwerkdienste erforderlichen, frei konfigurierbaren und auswählbaren Fähigkeiten (beispielsweise Kodierungsfunktionen) gemäß dem Datenaustauschstandard aufweist. Dadurch, dass die Erfindung einen Nachrichten-Identifikator gemäß dem Datenaustauschstandard vorsieht, ist sie auch universell verwendbar.

Sowohl die erfindungsgemäße Maschinensteuerung als auch andere oder alle Netzwerkteilnehmer, mit denen erfindungsgemäß kommuniziert wird, können konform zu einem Datenaustauschstandard betrieben werden. Solch ein erfindungsgemäßer Datenaustauschstandard kann ein industrielles Kommunikationsprotokoll, beispielsweise ein Maschine-zu-Maschine-Kommunikationsprotokoll, wie OPC-UA sein. Dabei steht OPC-UA für Open Platform Communication - Unified Architecture. Mittels der OPC-UA wird eine Vernetzung verschiedenster Komponentenhersteller herstellerunabhängig ermöglicht. OPC-UA erweitert OPC um wesentliche Eigenschaften, wie beispielsweise die Übertragung von Semantikinformationen und die erweiterten Möglichkeiten zum Aufrufen von Methoden, und ermöglicht einen standardisierten und herstellerübergreifenden Datenaustausch zwischen verschiedenen Komponenten, und zwar unabhängig von Programmiersprache und Betriebssystem. OPC-UA verbindet über ein standardisiertes Kommunikationsprotokoll und über standardisierte Schnittstellen sowie Funktionalitäten die Geräte verschiedener Ebenen der Automatisierungspyramide. Vor allem kann OPC-UA dem Austausch von Daten aus der Feldebene mit darüber liegenden Ebenen der Automatisierungspyramide dienen. So können über OPC-UA beispielsweise Daten aus einem Echtzeit-Bereich der Feldebene, in welchem die Feldgeräte über einen echtzeitfähigen Feldbus kommunizieren, zu einer Managementebene oder einer Steuerungsebene der Fabrikautomation übertragen werden, in der Planung, Ablaufsteuerung und Logistikprozesse erfolgen. Beispielsweise ermöglicht die OPC-UA-Technologie eine einheitliche Vernetzung von Maschinensteuerungen, wie etwa von CNC-Steuerungen, Bewegungssteuerungen (Motion) für z.B. Verpackungsmaschinen oder Logiksteuerungen wie z.B. speicherprogrammierbare Steuerungen (SPS), mit den darüber liegenden Steuerungs- und Managementebenen. Wenn hierin Maschinensteuerung oder SPS genannt wird, ist dies stets als austauschbar mit allen vorgenannten Steuerungen anzusehen und umgekehrt.

Bevorzugt kommt auch die Verwendung von OPC-UA-TSN (Time Sensitive Networking) für die Erfindung in Betracht, da dadurch im Hinblick auf die Industrieautomation nützliche Verbesserungen der Echtzeitfähigkeit mittels der Erfindung erreicht werden können. Darauf wird weiter unten noch näher eingegangen.

Die Bezugnahmen hierin auf OPC-UA gelten auch für andere Datenaustauschstandards, die für die Erfindung verwendet werden können. Hierin wird allerdings beispielhaft im Wesentlichen auf OPC-UA Bezug genommen, wobei OPC-UA in diesem Sinne austauschbar mit funktionsgleichen oder mit ähnlichen Datenaustauschstandards oder auch mit Kommunikationsprotokollen und -standards sein soll und umgekehrt.

Erfindungsgemäß steuert die Maschinensteuerung ein mechatronisches System. Das mechatronische System weist einerseits mechatronische, das bedeutet beispielsweise elektrische, elektronische, hydraulische, mechanische, pneumatische oder aus diesen Prinzipien kombinierte oder anderweitige Komponenten auf, die in einem Systemverbund zusammengefasst sind und als solcher als eine zusammengefasste, mechatronische Einheit oder mechatronische Maschine fungieren. Dies kann beispielsweise eine Werkzeugmaschine sein, in der mehrere Elektromotoren die Achsen der Werkzeugmaschine antreiben. Komponenten des mechatronischen Systems werden vorzugsweise durch eine oder mehrere Maschinensteuerungen koordiniert, gegebenenfalls synchronisiert und als Systemverbund gesteuert. Dabei ist die Maschinensteuerung beispielsweise eine Logiksteuerung, wie zum Beispiel eine speicherprogrammierbare Steuerung (SPS), eine Bewegungssteuerung, wie beispielsweise eine CNC (Computer Numeric Control) oder - generell ausgedrückt - eine übergeordnete Systemsteuerung, die auch aus mehreren, unterschiedlichen Steuerungsplattformen und -Architekturen zusammengesetzt werden kann. Die Maschinensteuerung kann dabei eine integrierte Maschinensteuerung sein, die auch eine Echtzeitkomponente, in Software oder Hardware, und eine übergeordnete Logiksteuerung, Prozesssteuerung oder allgemeine Steuerung in einer Einheit, vorzugsweise in einem Gehäuse, integriert.

Eine solche Maschinensteuerung kann eine separate und dedizierte Hardware sein, also etwa eine elektronische Komponente des mechatronischen Systems, die als eine physikalische Maschinensteuerung ausgestaltet ist. Es kann sich aber auch um eine Embedded-Steuerung handeln oder um eine virtuelle, beispielsweise auf einem Industrie-PC emulierte bzw. virtualisierte, Steuerung handeln. Eine Steuerung kann schließlich auch als Software-Applikation auf einem (Industrie-) PC realisiert sein.

Erfindungsgemäß ist eine Maschinensteuerung als ein Netzwerkteilnehmer in das Netzwerk zum Datenaustausch eingebunden. Die Maschinensteuerung empfängt, sendet, bearbeitet, verwaltet, koordiniert, erzeugt oder generiert Maschinensteuerungsdaten. Solche Daten sind beispielsweise auf das mechatronische System bezogene oder von dem mechatronischen System stammende Daten. Diese Steuerungsdaten werden von der Maschinensteuerung kommuniziert, also gesendet und/oder empfangen. Dies ist für ein mechatronisches System eine wesentliche Voraussetzung des reibungslosen Funktionsablaufs. Hier setzt die Erfindung an, indem die Maschinensteuerung zur Kommunikation der Steuerungsdaten wahlfrei als Subscriber und/oder als Publisher einer Publish-/Subscribe-Kommunikationsarchitektur konfiguriert werden kann. Es können durch den Datenaustauschstandard verschiedene Übertragungsarchitekturen bereitgestellt werden, die die Erfindung anwendungsspezifisch nutzt. Vorliegend wird für die Übertragung eine Publish/Subscribe-Architektur des Datenaustauschstandards verwendet. Charakteristisch für eine solche Publish/Subscribe-Architektur ist es, dass der Publisher den oder die Subscriber nicht individuell adressiert und somit nicht unbedingt "kennt".

Erfindungsgemäß können Maschinensteuerungsdaten (der Einfachheit halber hierin auch verkürzt als "Steuerungsdaten" bezeichnet) mit allen Vorzügen einer Publish/Subscribe-Architektur bereitgestellt werden (beispielsweise Steuerungsdaten gleichzeitig für eine Mehrzahl von Subscribern und/oder zyklisch zu verteilen). Dazu kann die Maschinensteuerung als mit dem Datenaustauschstandard konformer Subscriber oder Publisher konfiguriert sein. Die Übertragung kann dabei in Form von mit dem Datenaustauschstandard konformen Netzwerknachrichten erfolgen, die jeweils für eine flexible Anzahl von Subscribern vorgesehen sind, wobei ein Netzwerkteilnehmer - allgemein gesagt - nach Maßgabe des Nachrichten-Identifikators seine zu beziehende Nachricht selektiv erhält oder auswählt und/oder den ihn interessierenden Datensatz anhand des Nachrichten-Identifikators aus einer Netzwerknachricht selektiv entnimmt.

In der genannten Publish/Subscribe-Architektur nimmt ein Publisher die Übertragung in Form von mit dem Datenaustauschstandard konformen Netzwerknachrichten vor. Dabei werden die Daten mit Methoden oder Funktionalitäten, die in dem Datenaustauschstandard standardisiert sind, gekennzeichnet und übertragen. Solche Nachrichten sind jeweils für eine flexible Anzahl von Subscribern vorgesehen.

Der Subscriber kann nach Maßgabe des Nachrichten-Identifikators seine zu beziehende Nachricht selektiv erhalten (z.B. bei Verwendung einer Publish/Subscribe-Architektur mit Unicast-Adressierung, siehe unten). Alternativ oder zusätzlich kann der Subscriber den ihn interessierenden Datensatz anhand des Nachrichten-Identifikators selektiv aus einer so identifizierten oder empfangenen Netzwerknachricht extrahieren (z.B. bei Verwendung einer Publish/Subscribe-Architektur mit Multicast-Adressierung, siehe unten).

Bei der Unicast-Adressierung werden in einem Header (Bestandteil eines erfindungsgemäßen Nachrichten-Identifikators) einer Netzwerknachricht Absenderinformationen, wie etwa eine Publisher-ID, z.B. die Identifikation einer absendenden Maschinensteuerung, eingeschrieben; außerdem kann der Nachrichten-Identifikator bei einer Unicast-Adressierung Informationen (z.B. IP-Adresse) des Empfängers bzw. Adressaten tragen, anhand derer die jeweilige Netzwerknachricht mit den Steuerungsdaten zum jeweils vorgesehenen Adressaten geroutet wird. Vorzugsweise enthält eine solche Netzwerknachricht Steuerungsdaten nur für den vorgesehenen Adressaten, so dass für jeden Adressaten im Netzwerk eine eigene Unicast-Netzwerknachricht generiert, übertragen und entsprechend geroutet wird.

Demgegenüber trägt eine erfindungsgemäße Netzwerknachricht bei der Multicast-Adressierung - ggf. neben den o.g. Absenderinformationen - Steuerungsdaten für mehrere Empfänger, so dass jede Netzwerknachricht an mehrere Netzwerkteilnehmer geroutet wird und anhand des Nachrichten-Identifikators der Netzwerkteilnehmer aus der Netzwerknachricht seine ihn betreffenden Steuerungsdaten extrahiert.

Die Konfigurationsfähigkeit der Maschinensteuerung wahlfrei als Publisher und/oder als Subscriber kann beispielsweise in einer Firmware und/oder in einer Maschinensteuerungsapplikation der Maschinensteuerung vorgesehen sein, sodass der Anwender lediglich die entsprechende Konfiguration der Maschinensteuerung ansprechen oder auswählen muss. Bei einer etwa als Software-Applikation ausgebildeten Maschinensteuerung kann die Konfigurationsmöglichkeit in Software der entsprechenden Applikation realisiert sein. Wesentlich ist dabei, dass die Konfiguration wahlfrei erfolgt; dies kann bedeuten, dass eine Maschinensteuerung jederzeit und/oder frei auswählbar und/oder automatisch oder manuell einstellbar entsprechend vorgesehen und/oder konfiguriert werden kann.

Die Maschinensteuerung kann dabei simultan bzw. gleichzeitig sowohl als Publisher als auch als Subscriber konfiguriert werden; dies stellt z.B. eine Realisierung eines Rückkanals einer Feldbusarchitektur dar (siehe weiter unten). Sie kann auch wahlfrei entweder als Subscriber oder als Publisher konfiguriert werden. In diesem Sinne stellen die dementsprechenden Konfigurationen der Maschinensteuerung Kommunikationsinstanzen der Maschinensteuerung dar, zwischen denen jederzeit beliebig - durch einfache Konfiguration - gewechselt werden kann. Zusammenfassend kann die Maschinensteuerung simultan oder zeitlich versetzt keine, eine oder mehrere verschiedene Publisher (-Kommunikationsinstanzen) und/oder keine, eine oder mehrere verschiedene Subscriber (-Kommunikationsinstanzen) aufweisen.

Bei der Industrieautomatisierung kann eine Maschinensteuerung Steuerungsdaten empfangen, beispielsweise zur Synchronisation mit (insbesondere Bewegungs-) Prozessen, die von einer anderen Steuerung verwaltet werden. Eine solche Maschinensteuerung, die dann insbesondere als Slave in einer Master-/Slave-Topologie in einer Feldbusarchitektur agiert, kann, vorteilhafterweise ebenfalls prozesssynchron, Steuerungsdaten an das Netzwerk zurückliefern. Gleichermaßen kann eine Maschinensteuerung, die Steuerungsdaten über das Netzwerk sendet (etwa der Master in der oben genannten Master-/Slave-Architektur), zurückgelieferte Steuerungsdaten empfangen. Solche auch entgegen einer Hierarchie oder bevorzugten Kommunikationsrichtung von Steuerungskomponenten zurückgelieferten Steuerungsdaten können der Prozesskontrolle dienen und etwa Bewegungssollwerte, allgemein Sollwerte, Statusdaten, Istwerte oder Sensordaten umfassen. Daher ist aus technischen Gründen für eine Kommunikation häufig ein komplementärer Kanal, auch Rückkanal genannt, vorgesehen. Die Erfindung hat erkannt, dass für die entsprechende Umsetzung eines solchen Rückkanals - beispielsweise realisiert in einer SERCOS-Bustopologie, insbesondere in einem SERCOS-Doppelring, oder in einer beliebigen anderen Feldbustopologie - eine Maschinensteuerung (auch gleichzeitig oder simultan) als Publisher und als Subscriber einer erfindungsgemäßen Topologie fungieren kann.

Erfindungsgemäß sieht der Datenaustauschstandard definierte Vorgaben, beispielsweise Konfigurationsparameter, vor. Solche Vorgaben werden in der Maschinensteuerung eingestellt, sind bereits voreingestellt oder können wahlfrei ausgewählt werden. Dadurch findet auch die erfindungsgemäße Konfiguration der Maschinensteuerung als Publisher und/oder als Subscriber statt. Dabei werden im Rahmen der gemäß dem Datenaustauschstandard vorgesehenen Publish-/Subscribe-Kommunikationsarchitektur vorgesehene Kommunikationsparameter und/oder Umgebungsvariablen die Kommunikation betreffend und/oder Kommunikationsbedingungen gesetzt und/oder eingestellt und/oder ausgewählt. Des Weiteren kann die Konfiguration umfassen, welche Daten gesendet und/oder empfangen werden, welche Kommunikationszyklen vorgesehen sind und auch das verwendete Netzwerkprotokoll. Insbesondere wird aber durch die entsprechende Konfiguration festgelegt, ob die betreffende Maschinensteuerung in dem Betriebsmodus als Publisher oder als Subscriber fungiert. Dadurch kann die Flexibilität eines vernetzten, industriellen Automatisierungssystems sehr systemtreu nachgebildet bzw. berücksichtigt werden.

Eine Maschinensteuerung, die in einem mechatronischen System Daten zur Synchronisierung mit anderen Systemkomponenten zur Verfügung stellt, würde beispielsweise als Publisher konfiguriert, der die betreffenden Daten zyklisch veröffentlicht und im Netzwerk zur Verfügung stellt. In einer solchen Konfiguration wäre die Maschinensteuerung analog zu einem System-Master zu sehen, der Synchronisationsdaten in das Netzwerk verteilt. Eine beispielsweise mit solchen Synchronisationsdaten zu synchronisierende Maschinensteuerung könnte dann als Subscriber dieser Synchronisationsdaten konfiguriert sein. Allgemein gesagt, werden bei einer solchen Konfiguration die Rolle der entsprechenden Maschinensteuerung als Publisher (zum Beispiel Master) oder als Subscriber (Slave) und die Art und der Umfang der Daten, die dabei ausgetauscht werden, festgelegt.

Im Falle der Konfiguration als Publisher weist die Maschinensteuerung erfindungsgemäß die Fähigkeit auf, die Steuerungsdaten zunächst mit einem Nachrichten-Identifikator zu versehen. Ein solcher Nachrichten-Identifikator dient der korrekten Behandlung einer solchen Netzwerknachricht in einer erfindungsgemäßen Publish-/Subscribe-Kommunikationsarchitektur. Ein Nachrichten-Identifikator identifiziert die Netzwerknachricht, beispielsweise als von der als Publisher konfigurierten Maschinensteuerung stammend. Er kann aber auch andere Informationen zu der Nachricht enthalten, wie beispielsweise Inhaltsinformationen bezüglich der Nachricht, Metainformationen der Nachricht, wie zum Beispiel Nachrichtenlänge, enthaltene Variablen, Zusammensetzung oder Umfang oder Abdeckung der Nachricht, zeitliche Informationen, wie etwa ein Zeitstempel, Routinginformationen oder dergleichen. Ebenso kann der Nachrichten-Identifikator Semantikinformationen, d. h. insbesondere Bedeutungen und/oder Inhaltsangaben über die enthaltenen Steuerungsdaten aufweisen. Auch eine Information über die Herkunft der Steuerungsdaten und/oder eine Information über die die Daten einschreibende Einheit (beispielsweise eine Writer-Identifikation) können vom Nachrichten-Identifikator umfasst sein. Die genannten Eigenschaften des Nachrichten-Identifikators gelten entsprechend auch für den Fall der Konfiguration als Subscriber, wobei gegebenenfalls die oben genannten Ausführungen sinngemäß anzupassen sind.

Weiter im Falle der Konfiguration als Publisher hat die Maschinensteuerung die Fähigkeit, die zum Datenaustausch vorgesehenen Steuerungsdaten als Netzwerknachricht zu encodieren. Bei der Enkodierung (die folgenden Ausführungen sind sinngemäß auch auf die Dekodierung, also auf den gesamten Kodierungsvorgang, anwendbar) werden Mechanismen oder auch vorbestimmte Methoden des Datenaustauschstandards verwendet, etwa hierfür vorbestimmte, standardisierte Kodierungsfunktionalitäten. Durch die Enkodierung werden die Steuerungsdaten zu einer entsprechenden Netzwerknachricht zusammengestellt und über die Netzwerkarchitektur kommunizierbar formatiert. Es werden Netzwerknachrichten quasi aus den Steuerungsdaten erstellt, wobei standardgemäß ein Header vorgesehen ist, der im wesentlichen Transport- und Metainformationen bezüglich der Netzwerknachricht enthält; desgleichen wird bei der Enkodierung mittels der Enkodierungsfunktion auch die Payload (insbesondere standardkonform) aufgebaut, die die gemäß dem Datenaustauschstandard formatierten und/oder gewandelten Steuerungsdaten repräsentiert. Weiterhin übernimmt der erfindungsgemäß vorgesehene Encoder die Anordnung und die Abfolge sowie das Einschreiben der zu übertragenden Informationseinheiten, beispielsweise von Datenbytes, in eine zu übertragende, resultierende Netzwerknachricht mit den Steuerungsdaten.

Die so erzeugte Netzwerknachricht ist dann sowohl mit dem Datenaustauschstandard konform als auch mit einem von dem Datenaustauschstandard unterstützten Netzwerkprotokoll und wird als Netzwerknachricht von der Maschinensteuerung über das Netzwerk gesendet. Durch diese in einer Maschinensteuerung flexibel konfigurierbaren Funktionalitäten bietet die Erfindung ein hohes Maß an Flexibilität, so dass den vielfältigen Möglichkeiten der Ausgestaltung eines mechatronischen Systems, insbesondere eines Systems der Industrieautomatisierung, dadurch Rechnung getragen wird. Die Erfindung ermöglicht eine systemtreue Ausprägung des Kommunikationsverfahrens bei - auch häufiger - Umkonfiguration des gesamten Systems. Dann kann nämlich das Kommunikationsverfahren derart angepasst werden, dass die an dem System beteiligten Maschinensteuerungen flexibel als (ein oder mehrere) Publisher und/oder (gegebenenfalls auch simultan) als (ein oder mehrere) Subscriber konfiguriert werden können.

In dem Fall, dass die Maschinensteuerung als Subscriber konfiguriert ist, gelten alle obigen Ausführungen entsprechend. Die Maschinensteuerung empfängt dann eine mittels eines Nachrichten-Identifikators für den Subscriber bestimmte Netzwerknachricht über das Netzwerk. Die Ausführungen zu den Inhalten des Nachrichten-Identifikators hierin gelten dann entsprechend (insbesondere mutatis mutandis); als Subscriber bestimmt die Maschinensteuerung anhand des Nachrichten-Identifikators, ob und welche der Daten bzw. Netzwerknachrichten bzw. welcher Bestandteil der Netzwerknachrichten für den betreffenden Subscriber bestimmt sind/ist. Mit den oben ausgeführten Mechanismen dekodiert die Maschinensteuerung die Netzwerknachricht zu den zum Empfang vorgesehenen Steuerungsdaten mit den oben ausgeführten Mitteln und Maßnahmen.

Bevorzugte Ausgestaltungen, die den Gegenstand der Erfindung nicht einschränken, sind in den Unteransprüchen beschrieben.

Ein hohes Maß an Flexibilität bei der erfindungsgemäßen Kommunikation der Steuerungsdaten wird dadurch erreicht, dass die Maschinensteuerung als Publisher die zu enkodierenden Steuerungsdaten und/oder die enkodierte Netzwerknachricht bzw. dass die Maschinensteuerung als Subscriber die empfangene Netzwerknachricht und/oder die dekodierten Steuerungsdaten in einem bezüglich der Maschinensteuerung statischen (insbesondere fest für die entsprechende Funktion allokierten) und/oder nicht temporären (insbesondere nicht flüchtigen und/oder permanenten, weiter insbesondere unabhängig vom Ablauf, dem Aufrufen oder der Beendigung der entsprechenden, erfindungsgemäßen Funktionalität) und/oder globalen (insbesondere im Adressraum der Steuerung anwendungsübergreifend zugänglichen) Speicherbereich bereitstellt. Dadurch ist informationstechnisch ein jederzeitiger Zugriff - beispielsweise unabhängig von der gerade in der Maschinensteuerung ablaufenden Funktion oder Prozedur - auf die Steuerungsdatensätze möglich. Des Weiteren kann dadurch auch eine Modularisierung aller oder ausgewählter, erfindungsgemäßer Funktionalitäten der Maschinesteuerung erfolgen. So können die Konfigurationsvorgänge (jeweils die Konfiguration als Subscriber und/oder Publisher), Enkodierung und/oder Dekodierung sowie das Versenden und/oder Empfangen, jeweils insbesondere mittels Verwendung von Netzwerkdiensten, die von dem Datenaustauschstandard unterstützt werden, in separaten Modulen realisiert werden, die individuell verwendbar und bedarfsgemäß aufrufbar sind. Wenn ein eingangs genannter Speicherbereich verwendet wird, ergibt sich der Vorteil, dass ein etwa in Software verkörpertes Bereitstellungsmodul wie eine Komponente oder ein Baustein verwendet werden kann, an dessen Eingang die (auch zu enkodierenden bzw. zu dekodierenden) Steuerungsdaten und an dessen Ausgang die Ausgabedaten (wie beispielsweise die enkodierte Netzwerknachricht oder dekodierte Steuerungsdaten) - insbesondere quasi permanent - anliegen und so dauerhaft und/oder quasi kontinuierlich und/oder steuerungsübergreifend und/oder instanzübergreifend und/oder für jedes Steuerungsprogramm an jeder Stelle verfügbar sind. Hierauf wird weiter unten noch näher eingegangen.

Bei dem genannten Verfahren wird etwa bei der Initialisierung der vorgesehene/benötigte Speicher allokiert. Das Publish-/Subscribe-Kommunikationsmodell - insbesondere das des OPC-UA-Standards - bietet eine hohe Speicherbehandlungs-Dynamik. Insbesondere kann der verwendete Speicher in hohem Maße flexibel gehandhabt - also etwa hinsichtlich der verwendeten und nötigen Größe variiert - werden. Wenn die Maschinensteuerung als Publisher konfiguriert ist, kann - etwa zur Wahrung der Kompatibilität der OPC-UA-Speicherdynamik mit der statischen Allokierung - die Konfiguration des steuerungsseitig vorgesehenen, statischen Speichers erfindungsgemäß ausgelesen und bei der Kommunikation der Steuerungsdaten berücksichtigt werden (z.B. durch Wahrung einer Höchstgröße der verwendeten Dateneinheiten, wie etwa Steuerungsdaten und/oder Netzwerknachrichtenlänge).

Wenn die Maschinensteuerung als Subscriber konfiguriert ist, könnte der Fall eintreten, dass eine Nachricht empfangen wird, die theoretisch länger sein könnte als erwartet. Um die Kompatibilität, Konsistenz der Daten und/oder die Effizienz zu verbessern, kann die Konfiguration des steuerungsseitig vorgesehenen, statischen Speichers erfindungsgemäß ausgelesen und bei der Kommunikation der Steuerungsdaten berücksichtigt werden; im genannten Falle des Subscribers erfolgt dies z.B. durch einen statischen Speicher, der größer als die maximale Länge einer Netzwerknachricht konfiguriert wird oder durch Mitsenden der Nachrichtenlänge mit der Netzwerknachricht oder generell durch Kommunikation der (individuellen und/oder maximalen) Nachrichtenlänge. Bei Überschreiten einer maximal steuerungsseitig zugelassenen Grenze könnte etwa nach Auslesen der Nachrichtenlänge eine Anpassung der Konfiguration, insbesondere eine Initialisierung mit neuer, maximaler Nachrichtenlänge erfolgen. Dies kann für jede Nachricht erfolgen und/oder bedarfsgemäß und/oder auf Anforderung.

Die Kenntnis der Nachrichtenlänge ist insbesondere auch unabhängig von oben Gesagtem vorgesehen, da davon auch die Übertragungszeit und die Konfiguration der Netzwerkarchitektur abhängen kann. Die vorgenannten Maßnahmen sind daher generell vorteilhaft in Industrie-Automatisierungs-Umgebungen, insbesondere mit zumindest lokalen Echtzeitbereichen, da die Kenntnis der Nachrichtenlänge allgemein auch zur Wahrung der Integrität der Echtzeit bzw. zur Erfüllung von Kommunikationsanforderungen oder - Randbedingungen verwendbar ist.

Die Erfindung bietet ein hohes Maß an Interoperabilität, insbesondere in verschiedenen Netzwerkumgebungen und/oder bei verschiedenen Kommunikationsarchitekturen, wenn die Enkodierung bzw. die Dekodierung mit Methoden des Datenaustauschstandards erfolgt. Dabei bezieht sich die Enkodierung vornehmlich auf die Konfiguration einer Maschinensteuerung als Publisher, wo die Steuerungsdaten zu einer Netzwerknachricht enkodiert werden, während sich die Dekodierung vornehmlich auf die Konfiguration einer Maschinensteuerung als Subscriber zieht, wo die Netzwerknachricht zu den Steuerungsdaten dekodiert wird. Vorliegend werden für diese, zusammengefasst als Kodierung bezeichneten Funktionalitäten Mechanismen verwendet, die in dem Datenaustauschstandard standardisiert sind. Dies können beispielsweise standardspezifische Encoder bzw. Decoder sein, die in dem entsprechenden Datenaustauschstandard vorgesehen sind. Beispielsweise können OPC-UA Encoder und Decoder verwendet werden. Davon kann auch umfasst sein, dass bestimmte Variablen, Datentypen oder generell informationstechnische Objekte und Typen verwendet werden (zum Beispiel Zeitstempel, die in OPC-UA standardisiert sind).

Die oben genannten Mechanismen können dabei allgemein in dem Datenaustauschstandard verwendete bzw. referenzierte Algorithmen, Standards oder auch standardisierte Kodierungsformate sein. Alternativ oder zusätzlich können aber auch Methoden im informationstechnischen Sinne verwendet werden. Dazu verwendet die Erfindung einen vorbestimmten Datenaustauschstandard, der von der Maschinensteuerung unterstützt wird. Der Datenaustauschstandard hat solche standardisierten Methodenaufrufe, die bezüglich der Maschinensteuerung lokal integrierte Methoden - auch über das Netzwerk - aufrufen können. Generell sind solche Methodenaufrufe dazu vorgesehen, bestimmte Abläufe, Dienste, Algorithmen, Verfahren oder Ähnliches aufzurufen oder auf der Maschinensteuerung anzusprechen. Methoden im engeren Sinne können Funktionsaufrufe von Objekten sein, die nach ihrer Ausführung einen Status "erfolgreich" oder "nicht erfolgreich" übergeben. Eine Methode ist in diesem Sinne etwa generell eine Komponente eines Objektes, und im weiteren Sinne eine aufrufbare Software-Funktion, insbesondere als Komponente eines Objektes. Zu den lokal aufrufbaren Methoden gehören auch lokale, ausführbare Programme oder Programmteile. Über den Datenaustauschstandard ist der Methodenaufruf insbesondere so normiert, dass ein Netzwerkteilnehmer, der ebenfalls den Datenaustausch unterstützt, diesen Methodenaufruf dazu verwenden kann, über das Netzwerk eine Methode der Maschinensteuerung lokal aufzurufen. Solche lokalen Methoden verwendet die Erfindung dazu, die Kodierungsfunktionen festzulegen und/oder lokal auf der Maschinensteuerung im Sinne der Erfindung für die Kommunikation der Steuerungsdaten zu aktivieren.

Dazu wird zumindest eine vorbestimmte und/oder vorkonfigurierte, lokale Methode der Maschinensteuerung aufgerufen. Diese lokale Methode kann beispielsweise dazu dienen, einen Dienst, ein Objekt oder eine Variable der Maschinensteuerung, die für eine Kodierungsfunktion charakteristisch ist, zu adressieren, anzusprechen, anzusteuern, zu setzen, zu verändern oder zu konfigurieren. Vorzugsweise werden die Methoden, die seitens der Maschinensteuerung verfügbar sind, durch standardkonforme Anfragen - auch aus dem Netzwerk - identifiziert, vorzugsweise anhand der Objekte, die als Owner der unterstützten Methoden hinterlegt sind.

Die Erfindung erreicht ein hohes Maß an Aktualität der Steuerungsdaten, eine Anpassung des Umfangs und der Abdeckung der Steuerungsdaten und insbesondere auch ein hohes Maß an Flexibilität dadurch, dass die Kommunikation der Steuerungsdaten und/oder die Art und/oder der Inhalt und/oder der Umfang der kommunizierten Steuerungsdaten zur Laufzeit der Maschinensteuerung und/oder remote und/oder in der Maschinensteuerung selber konfigurierbar ist. Dies bedeutet insbesondere, dass praktisch jederzeit, d. h. etwa während der aktiven Ausführung von Tasks bzw. von Echtzeit-Tasks, konfiguriert, d. h. variiert werden kann wie eingangs genannt. Dabei wird eine störungsfreie und/oder unterbrechungsfreie Fortführung der Laufzeit-Tasks der Maschinensteuerung sichergestellt. Während beispielsweise das Abrufen oder die Verwendung von Steuerungsdaten aus dem Laufzeit-Task erfolgt, wird zunächst die Konfiguration wie oben dargestellt vorgenommen. Erst bei abgeschlossener Konfiguration wird mit der neu konfigurierten Übertragung begonnen. Dazu wird mittels oben genannter Methoden bzw. Mechanismen die Konfiguration vorgenommen, beispielsweise werden Variablen, die den Umfang und den Inhalt der Steuerungsdaten definieren, erzeugt, geändert oder gelöscht. Hierauf wird im Einzelnen weiter unten näher eingegangen.

Die Übertragung der Steuerungsdaten kann, muss aber nicht zur Laufzeit der Maschinensteuerung erfolgen. Da die Erfindung die hohen Anforderungen an eine Konfigurierbarkeit zur Laufzeit bereits erfüllt, können die kommunizierten Daten jederzeit, also auch während einer Unterbrechung der Laufzeit, während der Inaktivität der Maschinensteuerung, bei Inbetriebnahme, Wartung, Reparatur oder Analyse der Maschinensteuerung und/oder des mechatronischen Systems oder seiner Komponenten, konfiguriert und kommuniziert werden.

Es werden insbesondere die Übertragung selber, also Übertragungszyklus, Übertragungsparameter, Netzwerkprotokolle oder Kommunikationsstack, aber auch die betreffenden Steuerungsdaten, die kommuniziert werden, geändert, gelöscht oder neu hinzugefügt und/oder die Anzahl und der Inhalt aller zu kommunizierenden Daten und Parameter konfiguriert. Die oben genannte Konfiguration erfolgt dabei wahlweise remote und/oder lokal in der Maschinensteuerung selber. Bei einer Remote-Konfiguration werden beispielsweise von einem Netzwerkteilnehmer des Netzwerkes, in das auch die betreffende Maschinensteuerung eingebunden ist, Konfigurationsinformationen an die Maschinensteuerung gesendet, gegebenenfalls von dieser quittiert (also deren ordnungsgemäßer Empfang an den Netzwerkteilnehmer zurückgemeldet) und dort anhand der Konfigurationsinformationen die Konfiguration vorgenommen. Bei der Remote-Konfiguration können auch von dem Remote-Netzwerkteilnehmer lokale Methoden der Maschinensteuerung zur Konfiguration aufgerufen werden. Wenn die Konfiguration lokal in der Maschinensteuerung erfolgt, kann dazu beispielsweise ein Eingabegerät oder eine spezielle Software - beispielsweise zur Inbetriebnahme - verwendet werden.

Erfindungsgemäß werden insbesondere spezifische, für die Kommunikation der Steuerungsdaten in der erfindungsgemäßen Publish-/Subscribe-Architektur charakteristische Eigenschaften, insbesondere Kommunikationsparameter, gesetzt bzw. konfiguriert. Dies können beispielsweise für die genannte Architektur charakteristische Übertragungsparameter oder Umgebungsvariablen sein, wie beispielsweise ein Identifikator des Publishers, ein Identifikator des Subscribers, ein Nachrichten-Identifikator und/oder ein Identifikator der die Steuerungsdaten einschreibenden Einheit. Ist die betreffende Maschinensteuerung als Subscriber konfiguriert, sind davon auch Informationen umfasst, die sich auf einen Netzwerkteilnehmer als Publisher beziehen, dessen Netzwerknachrichten für diesen Subscriber relevant sind; dies kann beispielsweise die Information sein, auf welchen Publisher der betreffende Subscriber "hören" soll. Umgekehrt kann bei einer Maschinensteuerung, die als Publisher konfiguriert ist, die Konfiguration auf Parameter bezogen sein, die sich auf die Übertragung, Kennzeichnung, Empfängereigenschaften, Adressierung von Netzwerknachrichten und/oder Steuerungsdaten beziehen; beispielsweise kann davon auch die Einrichtung als Multicast- oder Unicast-Architektur mit den entsprechenden Kommunikationsparametern für die betreffende Architektur umfasst sein.

Bei der erfindungsgemäßen Publish-/Subscribe-Kommunikationsarchitektur sind eine Vielzahl an spezifischen Einstellungen und/oder Parametern zu setzen und zu belegen. Andererseits ist es eine Erkenntnis der Erfindung, dass für die Verwendung mit Steuerungsdaten eines mechatronischen Systems eine Vielzahl an solchen Spezifika indifferent sind, insbesondere für die Steuerungsdaten irrelevant oder lediglich für die Kommunikation relevant, aber für eine Vielzahl an Anwendungsfällen identisch und/oder automatisiert zu ermitteln sind.

Um die Kommunikation von Steuerungsdaten sowohl zuverlässiger als auch einfacher handhabbar zu gestalten, wird vorgeschlagen, dass vorbestimmte Kommunikationsparameter bei der Konfiguration automatisch von der Maschinensteuerung vorbelegt werden (automatisierte Kommunikationsparameter). Dadurch wird die Sicherheit und Einfachheit der erfindungsgemäßen Kommunikation erhöht, und auch der Aufwand der manuellen Belegung und die Unsicherheit bei der manuellen Belegung verringert bis eliminiert. Außerdem wird dadurch die Reproduzierbarkeit des erfindungsgemäßen Verfahrens erhöht, indem die Varianten bei der Konfiguration um die oben genannten automatisierten Kommunikationsparameter verringert werden. Allgemein gesagt, werden etwa komplexere Parameter, steuerungsinterne Kommunikationsparameter und/oder bezogen auf die mechatronischen Eigenschaften oder auf die Steuerungsdaten indifferente Parameter automatisiert vorbelegt.

Insbesondere werden zur weiteren Vereinfachung des Verfahrens und um eine intuitive und praktisch instinktive Bedienung des Verfahrens bzw. einer erfindungsgemäßen Maschinensteuerung zu gewährleisten, solche vorbestimmten Kommunikationsparameter als versteckte, interne Parameter behandelt und für einen Benutzer, der eine Konfiguration vornimmt, ausgeblendet. Es können insbesondere Zugangsebenen für verschiedene Klassen von Benutzern vorgesehen sein; beispielsweise können bei einer Maschinensteuerung für einen Bediener, der die Maschinensteuerung zur alltäglichen, vorgesehenen Nutzung einrichtet oder umrüstet, sämtliche automatisierten Kommunikationsparameter ausgeblendet sein. Solche automatisierten Kommunikationsparameter können beispielsweise einen Identifikator des Publishers, des Subscribers oder der einschreibenden oder auslesenden Einheit umfassen, eine Multicast-Adresse oder allgemeine Verbindungsinformationen, wie etwa IP-Adressen der beteiligten Maschinensteuerungen/Netzwerkteilnehmer/Einheiten.

Die technische Verfahrensvereinfachung, solche Parameter auszublenden, kann ergänzt werden um eine grafische Darstellung, die den technischen Vorgang der Konfiguration der Kommunikation (insbesondere intuitiv) modelliert. Dazu kann etwa eine Repräsentation eines bestimmten Publishers beispielsweise auf einem Display mittels eines Eingabegerätes oder sonstiger Eingabemittel mit einem - insbesondere mit einem von mehreren dargestellten - Subscriber(n) verbunden werden. Dies kann technisch besonders einfach dadurch bewerkstelligt werden, dass die Repräsentation des Publishers vom Benutzer mit dem Eingabemittel z.B. via Touchscreen oder mit einer Maus oder mit einer Eingabecursorsteuerung in einen Subscriber bzw. in eine graphische Repräsentation (z.B. in Form eines Icons) eines Subscribers gezogen werden kann, wodurch die oben genannte, automatische Setzung auch von versteckten Parametern bewerkstelligt wird. In dem genannten Beispiel würde beispielsweise alles, was hinter der Verbindung des genannten Publishers mit dem genannten Subscriber steht, automatisch mit der genannten Benutzereingabe vollzogen werden (beispielsweise Publisher-Identifikator, Multicast-Adresse, Identifikator der einschreibenden Einheit automatisch gesetzt werden).

Für einen Ingenieur, der etwa eine Maschinensteuerung erstmalig einrichtet, in Betrieb nimmt, wartet, repariert, umprogrammiert, substanziell umkonfiguriert, erweitert oder kommissioniert, können aber auch die automatisierten Kommunikationsparameter - insbesondere auswählbar - eingeblendet werden.

Die erfindungsgemäße Konfiguration der Kommunikation der Steuerungsdaten wird dadurch besonders flexibel und passgenau auf die jeweilige Applikation anpassbar, dass zwischen automatisierten Kommunikationsparametern - wie oben beschrieben - und gerade nicht automatisierten Kommunikationsparametern angemessen und gezielt unterschieden wird. Dazu schlägt die Erfindung vor, dass - ergänzend oder alternativ zu den oben genannten, automatisierten Kommunikationsparametern - vorbestimmte Kommunikationsparameter bei der Konfiguration durch externe Setzung, insbesondere durch Benutzereingaben, bei der Konfiguration festgelegt werden (externe Kommunikationsparameter). Der Klarheit halber soll hier noch darauf hingewiesen werden, dass es sich bei allen genannten Parametern auch allgemein um (insbesondere technische) Attribute handeln kann. Insofern werden die Begriffe Parameter und Attribut hier jeweils austauschbar verwendet. Bei solchen, externen Kommunikationsparametern handelt es sich allgemein gesagt um technisch einfachere, weniger komplexe Parameter, die von einem alltäglichen Benutzer einfach festsetzbar und instruktiv sind. Insbesondere kann es sich um bezogen auf die mechatronischen Eigenschaften des zugrundeliegenden Systems, auf das sich die Steuerungsdaten beziehen, relevante Parameter bzw. direkt um Parameter des mechatronischen Systems handeln. Dies können auch Benutzer-Parameter sein, die zur Umrüstung beispielsweise einer Fertigung unmittelbar, einfach sowie eindeutig belegbar sind. Dies können grundsätzlich alle hierin genannten Parameter sein, vorzugsweise mit Ausnahme der unter der obigen Beschreibung zu Anspruch 5 als typische, automatisierte Kommunikationsparameter genannten Kommunikationsparameter. Insbesondere können dies die Auswahl und der Umfang der konkreten, zu kommunizierenden Steuerungsdaten, die Steuerungsdaten selber, oder Kommunikationsmodi, wie beispielsweise Unicast oder Multicast sein.

Um die Konfiguration möglichst unabhängig von der Technologie der teilnehmenden Maschinensteuerung und/oder unabhängig von der verwendeten Netzwerktechnologie vornehmen zu können, wird vorgeschlagen, dass die Konfiguration - wie oben genannt - über Methodenaufrufe des Datenaustauschstandards von Methoden in der Maschinensteuerung erfolgt. Unter Methoden des Datenaustauschstandards können die weiter oben beschriebenen, dedizierten, in beispielsweise OPC-UA vorgesehenen Methoden verstanden werden; andererseits können die hier genannten Methoden auch allgemein als in dem Datenaustauschstandard normierte Mechanismen dieses Datenaustauschstandards (beispielsweise OPC-UA) aufgefasst werden. Alles hierin Gesagte gilt - soweit nicht ausdrücklich anders angegeben - jeweils sowohl für eine Maschinensteuerung, die als Publisher konfiguriert ist als auch für eine Maschinensteuerung, die als Subscriber konfiguriert ist. Solche Methoden können beispielsweise die Konfiguration der Kommunikationsparameter umfassen, die Herstellung der entsprechenden Kommunikationsverbindung Publisher-Subscriber, die Auswahl und der Umfang der zu übertragenden Steuerungsdaten, die Auswahl eines (insbesondere konfigurierbaren) Netzwerkdienstes (Netzwerkservice). Die Methoden bzw. Mechanismen des Datenaustauschstandards in der Maschinensteuerung können dabei lokal von einem Programm bzw. einer Instanz der Maschinensteuerung oder auch remote über einen Netzwerkteilnehmer, insbesondere eine andere Maschinensteuerung, angesprochen bzw. aufgerufen werden.

Das Einsatzspektrum der Erfindung für Anwendungen der Industrieautomation wird dadurch erweitert, dass die Kommunikation der Steuerungsdaten in Echtzeit erfolgt. Dadurch können auch Applikationen der Industrieautomatisierung abgedeckt werden, die eine solche Kommunikation in Echtzeit erfordern. Dazu erfolgt die Implementierung bzw. der Aufruf der Kommunikation von Steuerungsdaten aus dem Echtzeitbereich einer Maschinensteuerung, beispielsweise einer speicherprogrammierbaren Steuerung (SPS) oder einer Computer Numeric control (CNC). Insbesondere erfolgt die Kommunikation der Steuerungsdaten in Echtzeit über den TSN-Standard eines echtzeitfähigen Ethernets (vorzugsweise gemäß der IEEE 802.1Q). Insbesondere werden die Steuerungsdaten in Echtzeit gemäß der Echtzeitklassen 0 (Best Effort), 1 (Background) oder 2 (Excellent Effort) aus der IEEE 802.1Q kommuniziert, für anspruchsvolle Fertigungsaufgaben sowie für eine Bewegungssteuerung oder für Werkzeugmaschinensteuerungen auch gemäß der Echtzeitklasse 3 (Critical Applications).

Des Weiteren kann für die Gewährleistung der Echtzeitfähigkeit auch ein sogenanntes virtuelles Netzwerk (VLAN) etabliert werden, vor allem mit ergänzten Priorisierungsmöglichkeiten, insbesondere ebenfalls gemäß der IEEE 802.1Q. Dazu kann der Ethernet-Frame, mittels dessen die Kommunikation erfolgt, um ein VLAN-Tag erweitert werden, das eine spezielle Größe (beispielsweise 4 Byte) aufweist. Die Echtzeitfähigkeit der verwendeten Übertragungsprotokolle kann - vor allem in Bezug auf echtzeitfähiges Ethernet (TSN) - sowohl oberhalb der eigentlichen Transportschicht als auch oberhalb der Netzzugangsschicht oder schließlich mittels einer geeigneten Modifikation der Netzzugangsschicht hergestellt werden.

Insbesondere bei der Industrieautomatisierung ist es erforderlich, die Zuverlässigkeit, Rechtzeitigkeit und Fehlerfreiheit der Kommunikation von Steuerungsdaten kontinuierlich zu überwachen, aufrecht zu erhalten und zu gewährleisten. Hierzu wird vorgeschlagen, dass eine Quality-of-Service-Diagnose (Dienstgüte-Diagnose) der Netzwerknachricht erfolgt. Dies kann auch eine Diagnose und Bewertung des jeweils empfangenen Netzwerk-Telegramms bzw. der Netzwerknachricht, des Headers der Netzwerknachricht oder auch der Payload bzw. der enthaltenen und extrahierten Steuerungsdaten umfassen. Grundsätzlich wird dadurch die Güte des Kommunikationsdienstes aus Sicht der Anwender kontinuierlich überwacht, insbesondere ob und in welchem Maße die Dienstgüte die Anforderungen der Applikation erfüllt.

Eine solche Dienstgüte-Diagnose umfasst vor allem die Latenzzeit, den Jitter, die Paketverlustrate und den Datendurchsatz, d. h. die pro Zeiteinheit im Mittel übertragene Datenmenge. Insbesondere kann die Erfindung eine Funktion aufweisen (insbesondere eines Funktionsbausteins einer speicherprogrammierbaren Steuerung, siehe dazu weiter unten), die bei der verwendeten Publish-/Subscribe-Kommunikationsarchitektur enthaltenen Dienstgüte-Parameter, zum Beispiel die Sequenznummer, einen Zeitstempel, Statuscodes der Netzwerknachrichten oder auch eine Versionsüberprüfung der Netzwerknachricht (insbesondere ob sich die Version der Nachricht geändert hat) auszuwerten und resultierende Diagnoseinformationen in einer bedarfsgerecht angepassten Struktur auszugeben.

Um die verwendete Kommunikationsarchitektur für Aufgaben der Industrieautomatisierung angemessen zu befähigen, ist die erfindungsgemäße Berücksichtigung und Auswertung eines Zeitstempels besonders vorteilhaft. Dabei werden etwa die minimale Zeit, die zwischen Empfang oder Senden zweier Nachrichten aufgetreten ist, die maximale Zeit und/oder Durchschnittszeit ausgewertet, die Zeitspanne, die seit dem Empfang oder dem Senden der letzten Nachricht verstrichen ist, und/oder die seit dem letzten, verlorenen Paket vergangene Zeit. Eine mitgeführte Sequenznummer kann dazu verwendet werden, verlorene Pakete (insbesondere verlorene Netzwerknachrichten) zu identifizieren, zu zählen und/oder zu berücksichtigen.

Die erhaltenen Diagnoseinformationen werden vorzugsweise bei der weiteren Bearbeitung und Nutzung der Steuerungsdaten berücksichtigt. Es kann auch unter Verwendung von kumulierten und/oder aggregierten Diagnosedaten eine Bewertung der Qualität der Netzwerkverbindung, eines ausgewählten Netzwerksegments oder des gesamten, für das mechatronische System im Hinblick auf die Kommunikationsqualität der Steuerungsdaten relevanten Netzwerkes oder Netzwerksegments erfolgen. Dies kann beispielsweise bei der Bewertung der Zuverlässigkeit der Kommunikation von Steuerungsdaten Anwendung finden. Dazu ist vorzugsweise im Netzwerk-Übertragungsprotokoll (vor allem in der Struktur eines übertragenen Datenpaketes bzw. eines übertragenen Datentelegrammes) ein Quality-of-Service-Slot vorgesehen. In diesem Zusammenhang ist es vorteilhaft, aus den ausgewerteten Dienstgüte-Parametern einen zeitlichen Verlauf der Dienstgüte der betrachteten Kommunikationsverbindung, eines Netzwerksegmentes, eines bestimmten Kommunikationspfades und/oder der gesamten, relevanten Netzwerkinfrastruktur abzuleiten.

Da es sich bei der erfindungsgemäßen Publish-/Subscribe-Kommunikationsarchitektur um im Wesentlichen entkoppelte Kommunikation (vor allem mittels UDP-Protokoll, Universal Datagram Packet-Protocol) handelt, wird seitens der Kommunikationsinfrastruktur möglicherweise keine oder nur eine für die Automatisierungstechnik unzureichende Diagnosefunktionalität bereitgestellt. Daher kann eine solche Funktionalität auf Seiten der Applikation erfolgen. Dazu werden - vor allem die in der Publish-/Subscribe-Architektur des verwendeten OPC-UA-Standards enthaltenen - Quality-of-Service-Parameter erfindungsgemäß ausgewertet und die Diagnoseinformationen werden in einer dafür geeigneten Struktur ausgegeben. Die beschriebene Diagnose und Qualitätsbewertung wird auch bei der weiteren Bearbeitung und Nutzung der Steuerungsdaten verwendet, etwa zur Wahrung oder Bestimmung der Konsistenz und/oder Isochronität der Steuerungsdaten; dies kann insbesondere für Echtzeitanwendungen vorteilhaft sein. Technisch ist dafür beispielsweise im Netzwerk-Übertragungsprotokoll (oder der Struktur des Datenpaketes) ein Quality-of-Service-Slot vorgesehen.

Wenn die Maschinensteuerung als Subscriber konfiguriert ist, ist die Dienstgüte-Diagnose der Netzwerknachricht besonders vorteilhaft, da dabei die Diagnosedaten beispielsweise für die Übertragung bzw. die Bewertung oder Berücksichtigung der Zuverlässigkeit der Übertragung verwendet werden können. Beispielsweise kann anhand der ermittelten Quality-of-Service-Parameter ein Konfidenzniveau der übertragenen Steuerungsdaten abgeleitet werden. Wenn eine Netzwerk-Diagnose durch einen Subscriber erfolgt, der etwa Steuerungsdaten von mehreren Publishern empfängt, kann das Ergebnis aussagekräftig sein für die empfangenen Daten von - insbesondere allen - relevanten Publishern und kann gegebenenfalls auch auf andere Netzwerkteilnehmer/Publisher angewendet oder übertragen werden. Es kann eine Aggregation von Diagnoseinformationen erfolgen, wodurch Rückschlüsse auf die Stabilität des Netzwerkes oder eines Netzwerksegmentes oder eines Kommunikationspfades gezogen werden können. Anhand der erhaltenen, konkreten Diagnoseinformationen eines Kommunikationspfades kann auch die Dienstgüte dieses Pfades ausgewertet werden und etwa bei schlechter Dienstgüte ein anderer Pfad verwendet werden.

Um die Interoperabilität des erfindungsgemäßen Übertragungsverfahrens zu gewährleisten, wird vorgeschlagen, dass die Enkodierung und die Dekodierung unter Verwendung eines standardisierten Kodierungsformates erfolgt, insbesondere mit JSON (Javascript Object Notation) oder UADP (Unified Architecture Datagram Packet). Die Steuerungsdaten können in einen standardgemäß vorgesehenen Container eingeschrieben werden. Das verwendete, standardisierte Kodierungsformat kann (muss aber nicht zwingend) ein Kodierungsformat des OPC-UA-Standards sein. In der OPC-UA-Spezifikation ist dazu das JSON und/oder das UADP-Kodierungsformat vorgesehen. Die übertragenen Steuerungsdaten bzw. deren Datenstruktur und/oder Datenformat können auch nicht OPC-UA-konform sein; die Konformität wird durch die Enkodierung/Dekodierung erreicht. Bevorzugt wird ein Kodierungsformat verwendet, welches auch die Nachrichtenstruktur enkodiert bzw. dekodiert. Durch eine optionale Kodierung mit UDP-Transportprotokoll und beispielsweise binär codierten Netzwerknachrichten werden insbesondere häufige Übertragungen kleiner Datenmengen besonders effizient gehandhabt. Insgesamt können vorzugsweise normierte Nachrichtenprotokolle verwendet werden (zum Beispiel AMQP - Advanced Message Queuing Protocol oder MQTT - Message Queue Telemetry Transport).

Die Erfindung wird dadurch weitgehend modularisierbar und flexibel einsetzbar, dass ein individuell aufrufbares bzw. ansprechbares Publishermodul die Maschinensteuerung als Publisher konfiguriert und/oder die Steuerungsdaten mit dem Nachrichten-Identifikator versieht und/oder mittels des Datenaustauschstandards als Netzwerknachricht enkodiert. Solch ein Modul kann beispielsweise eine Hardwarekomponente einer Maschinensteuerung (etwa einer SPS) sein. Bevorzugt ist es, wenn das individuell aufrufbare Modul ein Software-Modul, beispielsweise eine Funktion, eine Prozedur oder ein Funktionsbaustein (siehe dazu Ansprüche 16-19) ist. Ein solches, funktionales Modul kann jederzeit aufgerufen bzw. angesprochen und damit in Funktion gesetzt werden. Dadurch wird die oben genannte Funktionalität des Moduls jederzeit - auch unabhängig von anderen, in dem Modul nicht vorgesehenen Optionen/Funktionen - verfügbar gemacht.

Das im vorherigen Absatz gesagte gilt sinngemäß auch dann, wenn ein individuell aufrufbares Subscribermodul die Maschinensteuerung als Subscriber konfiguriert und eine mittels des Nachrichten-Identifikators für den Subscriber bestimmte Netzwerknachricht mittels des Datenaustauschstandards als Steuerungsdaten dekodiert. Des Weiteren gelten die obigen Ausführungen auch in dem Fall, dass ein, insbesondere individuell aufrufbares oder in ein anderes Modul integriertes, Netzwerkdienst-Modul die Netzwerknachricht bei einer als Subscriber konfigurierten Maschinensteuerung über das Netzwerk empfängt bzw. bei einer als Publisher konfigurierten Maschinensteuerung die Netzwerknachricht über das Netzwerk sendet.

Die eingangs genannten Aufgaben werden dadurch gelöst und die oben genannten Vorteile dadurch erreicht, dass eine Maschinensteuerung, insbesondere eine SPS, dazu eingerichtet ist, ein Verfahren nach einem der Ansprüche 1-13 auszuführen. Eine solche Maschinensteuerung ist insbesondere in ein mechatronisches System integriert und/oder entsprechend konfiguriert und/oder programmiert. Hierzu ist bevorzugt ein Computerprogramm für eine Rechnereinrichtung, insbesondere für eine Maschinensteuerung, beansprucht, welches bei Laden in eine und Ausführung auf einer Rechnereinrichtung ein Verfahren nach einem der Ansprüche 1-13 ausführt.

Eine modulare Anwendung der Erfindung für eine Vielzahl von Automatisierungsaufgaben wird dadurch ermöglicht, dass ein Funktionsbaustein oder mehrere Funktionsbausteine einer speicherprogrammierbaren Maschinensteuerung vorgesehen ist/sind, welcher/welche dazu eingerichtet ist/sind, ein Verfahren nach einem der Ansprüche 1-13 auszuführen. Es können alle, einzelne ausgewählte oder eine beliebig zusammengestellte Gruppe von Funktionalitäten in einem Funktionsbaustein zusammengefasst werden. Besonders bevorzugt ist es, wenn ein Funktionsbaustein dazu eingerichtet ist, ein Verfahren nach Anspruch 11 umzusetzen. Komplementär oder ergänzend dazu kann ein Funktionsbaustein dazu eingerichtet sein, ein Verfahren nach Anspruch 12 umzusetzen. Es ist des Weiteren bevorzugt, dass gemäß Anspruch 19 ein Netzwerkservice-Funktionsbaustein vorgesehen ist, der ein Verfahren nach Anspruch 13 umsetzt. Zusammenfassend ist eine bevorzugte Ausführungsform, dass jede Maschinensteuerung einen Publisher-Funktionsbaustein gemäß Anspruch 17, einen Subscriber-Funktionsbaustein gemäß Anspruch 18 und einen Netzwerkservice-Funktionsbaustein gemäß Anspruch 19 aufweist und dadurch die erfindungsgemäßen Funktionalitäten und die erfindungsgemäße Konfigurierbarkeit gewährleistet. Ein Publisher-Funktionsbaustein und/oder ein Subscriber-Funktionsbaustein können/kann auch die Netzwerkservice-Funktionalität integrieren.

Es ist für den Fachmann offensichtlich, dass jedes hierin beschriebene Ausgestaltungsmerkmal und jede hierin beschriebene Funktionalität in beliebiger Kombination mit einem oder mehreren, hier enthaltenen Merkmalen von der Erfindung umfasst sind, auch wenn die betreffende Kombination nicht explizit aufgeführt ist. Die betreffende Kombination wird auch unabhängig von anderen, etwa in einem Zusammenhang mit dem kombinierten Ausgestaltungsmerkmal bzw. der kombinierten Funktionalität ausgeführten Merkmalen als von der Erfindung umfasst verstanden werden, sofern zu diesem Ausgestaltungsmerkmal bzw. der Funktionalität nichts anderes explizit ausgeführt ist. Insbesondere bei jeglicher Aufzählung des gesamten Textes umfasst das Bindewort "und" stets auch die Bedeutung "oder" sowie die Bedeutung "und/oder"; entsprechend umfasst das Bindewort "oder" stets auch die Bedeutung "und" sowie die Bedeutung "und/oder".

Die Erfindung wird anhand von Ausführungsbeispielen und Zeichnungen grob schematisch erläutert. In den Zeichnungen sind gleiche oder funktionsgleiche Merkmale mit denselben Bezugszeichen versehen, sofern nichts anderes in der Beschreibung angegeben ist. Die in einer Figur gezeigten, technischen Ausgestaltungsmerkmale sind auf jede Variante der Erfindung anwendbar, und zwar auch unabhängig von anderen, in dieser Figur etwa enthaltenen und/oder beschriebenen Merkmalen, sofern zu dieser Figur bzw. diesem Ausgestaltungsmerkmal nichts anderes explizit ausgeführt ist. Es zeigen:
Figur 1 eine schematische Prinzipdarstellung eines mechatronischen Systems mit Komponenten der Industrieautomatisierung, die über ein Netzwerk mit einem Feldbussegment untereinander und mit anderen Netzwerkteilnehmern kommunizieren,
Figur 2 eine schematische Prinzipdarstellung eines mechatronischen Systems mit Komponenten der Industrieautomatisierung, die über einen Feldbus und gleichzeitig über eine schematisch angedeutete Publish-/Subscribe-Kommunikationsarchitektur untereinander und mit anderen Netzwerkteilnehmern kommunizieren,
Figur 3 eine Schemazeichnung von Modulen/Funktionsbausteinen gemäß der Erfindung,
Figur 4 eine beispielhafte Konfiguration einer Publish-/Subscribe-Kommunikation,
Figur 5 ein erfindungsgemäßes Publishermodul,
Figur 6 ein erfindungsgemäßes Subscribermodul,
Figur 7 ein Publishermodul mit einem separaten, angeschlossenen Netzwerkdienst-Modul,
Figur 8 ein Subscribermodul mit einem separaten, angeschlossenen Netzwerkdienst-Modul,
Figur 9 eine schematische Darstellung einer Konfigurationsfunktionalität für eine Publish-/Subscribe-Architektur
Figur 10 eine Konfigurations-Unterstützung für eine Publish-/Subscribe-Architektur,
Figur 11 ein Ablaufdiagramm für einen zeiteffizienten Verfahrensablauf, vor allem für einen Echtzeitbetrieb der Erfindung,
Figur 12 eine Diagnosefunktionalität.

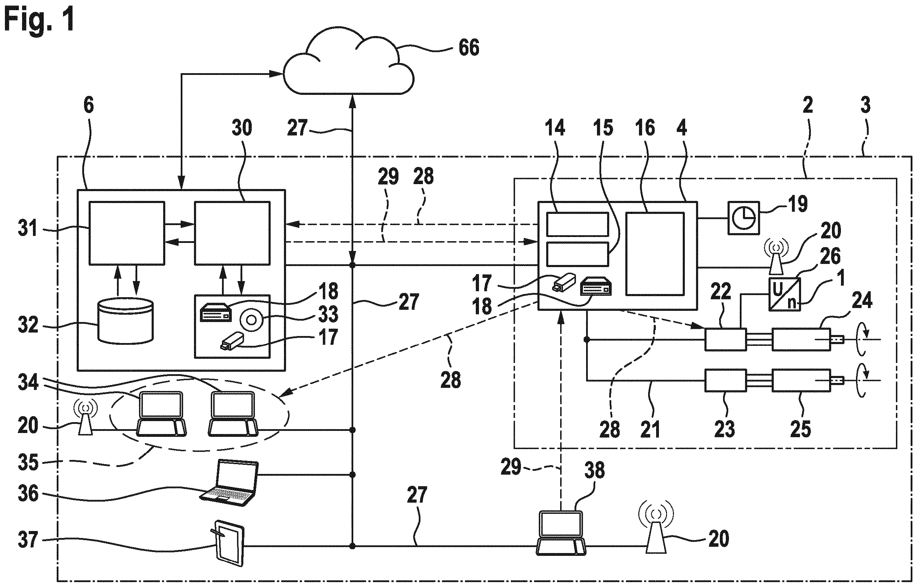

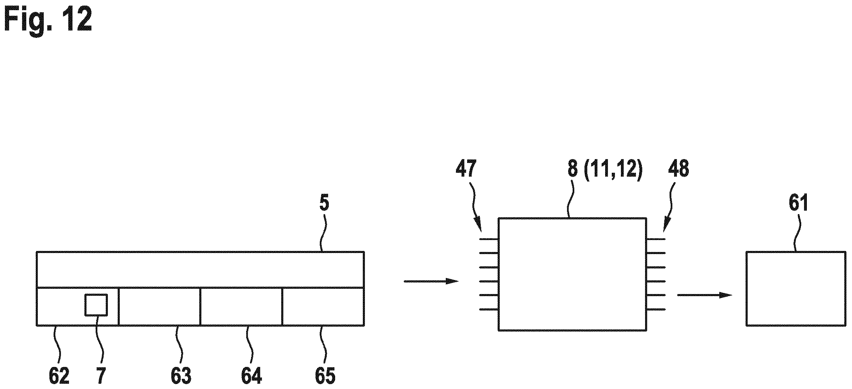

Figur 1 zeigt eine schematische Prinzipdarstellung eines mechatronischen Systems 2. In einem solchen mechatronischen System 2 - insbesondere in einem System der Industrieautomatisierung - fallen Maschinensteuerungsdaten 1 an, von denen in der Figur 1 exemplarisch eine Drehzahl 1 (im Folgenden austauschbar mit Maschinensteuerungsdaten bzw. Maschinensteuerungsdatum). Die Maschinensteuerungsdaten 1 werden in dem mechatronischen System 2 in einem Netzwerk 3 mit mehreren Netzwerkteilnehmern 4,6 kommuniziert. Dazu werden in dem Netzwerk 3 die Steuerungsdaten 1 mittels eines Datenaustauschstandards, der ein Publish-/Subscribe-Kommunikationsmodell unterstützt, von einem entsprechend konfigurierten Publisher gesendet. Die gesendeten Daten werden von einem Netzwerkteilnehmer 6,4 über das Netzwerk 3 mittels des Datenaustauschstandards empfangen. Dabei nimmt der Publisher die Übertragung in Form von Netzwerknachrichten 5 vor (siehe Figur 12). Die versendeten Netzwerknachrichten 5 sind jeweils für bedarfsweise auswählbare, vom Publisher entkoppelte Subscriber vorgesehen. Ein Subscriber erhält eine Netzwerknachricht 5 mit seinen zu beziehenden Steuerungsdaten 1, jeweils vorzugsweise ereignisgesteuert, selektiv oder wählt diese aus; zusätzlich oder alternativ kann der betreffende Subscriber die zu beziehenden Steuerungsdaten 1 auch aus einer empfangenen/analysierten Netzwerknachricht 5 selektiv entnehmen.

Im Falle des gezeigten, industriellen Automatisierungssystems 2 ist eine Maschinensteuerung 4 des mechatronischen Systems 2 als Netzwerkteilnehmer in das Netzwerk 3 eingebunden, und zwar einerseits über einen Feldbus 21, der die Maschinensteuerung 4 mit Komponenten der Industrieautomatisierung verbindet; andererseits über ein asynchrones Netzwerksegment 27, das die Maschinensteuerung 4 mit anderen IT-technischen Komponenten, wie beispielsweise PCs, verbindet. Die Maschinensteuerung 4 wird als Subscriber und als Publisher konfiguriert. Als Publisher versieht sie die Steuerungsdaten 1 mit einem Nachrichten-Identifikator 7 (siehe dazu Figur 12), codiert oder enkodiert die Steuerungsdaten mittels des Datenaustauschstandards zu einer Netzwerknachricht 5 und sendet die Netzwerknachricht 5 über das Netzwerk Als Subscriber empfängt sie eine mittels des Nachrichten-Identifikators 7 für diesen Subscriber (das ist dann die Maschinensteuerung 4) bestimmte Netzwerknachricht 5 über das Netzwerk 3 und dekodiert die Netzwerknachricht 5 mittels des Datenaustauschstandards zu nutzbaren Steuerungsdaten 1.

Das mechatronische System 2 ist kommunikativ im Wesentlichen mit den Industrieautomatisierungs-Komponenten mittels des Feldbusses 21 aufgebaut. Die Maschinensteuerung 4 verfügt über eine integrierte SPS 14 und eine ebenfalls integrierte CNC 15. Die Visualisierung von Maschinensteuerungsdaten 1 erfolgt über das ebenfalls in der Maschinensteuerung 4 integrierte Display 16. Des Weiteren hat die Maschinensteuerung 4 einen Anschluss für einen USB-Stick 17 zum Austausch von Steuerungsdaten mit insbesondere nicht in das Netzwerk 3 eingebundenen Teilnehmern. Des Weiteren ist eine Festplatte/SSD 18 vorhanden, die als interner Datenspeicher der Maschinensteuerung fungiert und auf der auch Steuerungsdaten 1 abgelegt, gepuffert und zwischen den einzelnen Modulen ausgetauscht werden. Über den Feldbus 21 ist die Maschinensteuerung 4 mit zwei Antriebsreglern 22,23 verbunden. Der Elektromotor 25 wird von dem Antriebsregler 23 angesteuert. Der Antriebsregler 22 steuert einen Servomotor 24 an. Über einen Drehzahlgeber 26 wird die momentane Drehzahl 1 (oder sonstige, für die Ansteuerung und/oder Überwachung des Servomotors 24 verwendete Daten) in den Antriebsregler 22 rückgeführt. Die Drehzahl 1 wird über den Feldbus 21 ebenfalls an die Maschinensteuerung 4 übertragen, wo sie erfindungsgemäß für die Kommunikation verarbeitet und verwendet wird. Um die Konsistenz (insbesondere zeitliche Konsistenz) der Steuerungsdaten 1 zu gewährleisten, ist unter anderem noch eine Uhr für eine Systemzeit 19 der Maschinensteuerung 4 vorgesehen. Die Steuerungsdaten 1 können mittels der Clock 19 mit einer Systemzeit - insbesondere einer systemweit synchronisierten Systemzeit - etwa in Form eines Zeitstempels versehen werden.

Das Netzwerk 3 stellt mittels des asynchronen Netzwerksegments 27 eine Kommunikationsverbindung her zwischen dem mechatronischen System 2 bzw. Komponenten des mechatronischen Systems 2 und einer Netzwerkinfrastruktur, die auf einem asynchronen (auch nicht-echtzeitfähigen) Netzwerkprotokoll beruht. Über das asynchrone Netzwerksegment 27 ist ein Industrie-PC 6 eingebunden. Der Industrie-PC 6 verfügt ebenfalls über eine interne Festplatte/SSD 18 und einen Anschluss für einen USB-Stick 17 (siehe oben); des Weiteren ist exemplarisch ein CD-/DVD-Laufwerk 33 gezeigt, über das ebenfalls erfindungsgemäß kommunizierte Steuerungsdaten 1 geladen oder weitergegeben werden können. Auf dem Industrie-PC 6 laufen unterschiedliche Programme, von denen beispielhaft eine OPC-UA-konforme Applikationsinstanz 30 und eine PC-Applikation 31 für Steuerungsdaten 1 (z.B. ein Steuerungs- oder Simulationstool) gezeigt sind. Im gezeigten Ausführungsbeispiel ist der Datenaustauschstandard OPC-UA. Über die OPC-UA-konforme Applikationsinstanz 30 des Industrie-PCs 6 werden die OPC-UA-standardkonformen Funktionalitäten, insbesondere die Kommunikation über OPC-UA, auf einem handelsüblichen Industrie-PC 6 zur Verfügung gestellt. Die mittels der OPC-UA-konformen Applikation 30 empfangenen oder gesendeten bzw. dekodierten oder enkodierten Steuerungsdaten 1 werden dann mit einer praktisch beliebigen, bedarfsweise auswählbaren PC-Applikation 31 für Steuerungsdaten 1 bidirektional ausgetauscht, so dass die erfindungsgemäße Kommunikation der Steuerungsdaten realisiert ist. Außerdem werden die Steuerungsdaten 1 über eine OPC-UA-konforme Schnittstelle mit weiteren Netzwerkteilnehmern 34,35,36,37,38 austauschbar. Dazu verfügt jeder Netzwerkteilnehmer 4,6,34,35,36,37,38 auch über eine OPC-UA-konforme Schnittstelle und/oder Applikation.

Über das asynchrone Netzwerksegment 27 sind außerdem noch in die Infrastruktur eingebunden:
- Office-PCs 34, die im Verbund als ein EDGE-Computing-System 35 fungieren, in dem beispielsweise Analyseaufgaben oder Rechenaufgaben bezogen auf das mechatronische System 2 ausgelagert sind. Ein Teil des asynchronen Netzwerksegments 27 ist auch ein Drahtlos-Überträger 20, über den ebenfalls unter anderem Steuerungsdaten 1 übertragen werden.
- Ein Notebook 36, ein Tablet 37 sowie ein Standalone-PC 38, der ebenfalls über einen Drahtlos-Überträger 20 kommuniziert
- Eine Netzwerkverbindung zu einer über das Internet zugänglichen Cloud 66 (beispielsweise zur Speicherung mit globaler Verfügbarkeit von Steuerungsdaten 1, etwa zur vorbeugenden Wartung oder Analyse von mechatronischen Systemen 2).

Im gezeigten Ausführungsbeispiel der Figur 1 ist die Maschinensteuerung 4 einerseits als Publisher und simultan als Subscriber konfiguriert. Dazu ist die Maschinensteuerung 4 in das mechatronische System 2 als Netzwerkteilnehmer eingebunden und kann an der Maschinensteuerung 4 anliegende Steuerungsdaten 1 in dem gesamten Netzwerk 3 kommunizieren. Bei der gezeigten Konfiguration als Publisher sind aus Sicht der Maschinensteuerung 4 drei Publisherpfade 28 vorgesehen, von denen einer von der Maschinensteuerung 4 zu dem Industrie-PC 6, einer zu dem EDGE-Computing-System 35 bzw. als Einstieg in einen der Office-PCs 34 und einer zu dem Antriebsregler 22 führt. Der Antriebsregler 22 hat dazu eine antriebsintegrierte (hier nicht gezeigt) Maschinensteuerung oder eine antriebsintegrierte SPS. Die Publisherpfade 28 sind physikalische und/oder virtuelle Pfade, die die Kommunikations-Infrastruktur des Netzwerkes 3 nutzen und beispielsweise über Ethernet und/oder über Drahtlos-Überträger 20 und/oder über den Feldbus 21 physikalisch realisiert sind (dies gilt sinngemäß auch für die Subscriberpfade 29, siehe dazu weiter unten).

Weiter bei der Konfiguration der Maschinensteuerung 4 als Publisher versieht diese die Steuerungsdaten mit einem Nachrichten-Identifikator 7 (siehe Figur 12), enkodiert diese mittels des Datenaustauschstandards OPC-UA als Netzwerknachricht 5 und sendet die Netzwerknachricht 5 über das Netzwerk 3. Im gezeigten Ausführungsbeispiel sind als Subscriber konfigurierte Netzwerkteilnehmer 6,35 des asynchronen Netzwerksegments 27 vorhanden, die die von der Maschinensteuerung 4 veröffentlichten Steuerungsdaten 1 erfindungsgemäß empfangen. Dadurch werden die von dem mechatronischen System 2 stammenden Steuerungsdaten 1 auf dem Office-PC 6 und auch in dem EDGE-Computing-System 35 verfügbar gemacht. Im Einzelnen hat der Industrie-PC 6 eine OPC-UA-konforme Applikationsinstanz 30, die eine auf dem Industrie-PC ablaufende Applikation ist und mit einer Ziel-PC-Applikation 31 für Steuerungsdaten 1 bidirektional kommuniziert und die OPC-UA-konform ausgetauschten Steuerungsdaten 1 überträgt. Generell kann eine solche OPC-UA-konforme Applikationsinstanz 30 bzw. eine OPC-UA-konforme Applikation auf jedem der Netzwerkteilnehmer 4,6,34,35,36,37,38 vorhanden sein. Gleichzeitig ist ein als Subscriber konfigurierter Antriebsregler 22 vorhanden, der über den Publisherpfad 28 (aus Sicht der Maschinensteuerung 4 gesehen) die Steuerungsdaten 1 von der Maschinensteuerung 4 empfängt; dies kann physikalisch über den Feldbus 21 erfolgen, so dass die Kommunikation der Steuerungsdaten 1 auch in Echtzeit erfolgen kann.

Simultan ist die Maschinensteuerung 4 als Subscriber konfiguriert (und zwar, wie oben bei der Konfiguration als Publisher auch, jeweils die steuerungsintegrierte SPS 14). Sie empfängt dabei über den (aus Maschinensteuerungssicht) Subscriberpfad 29 Steuerungsdaten von dem Industrie-PC 6.

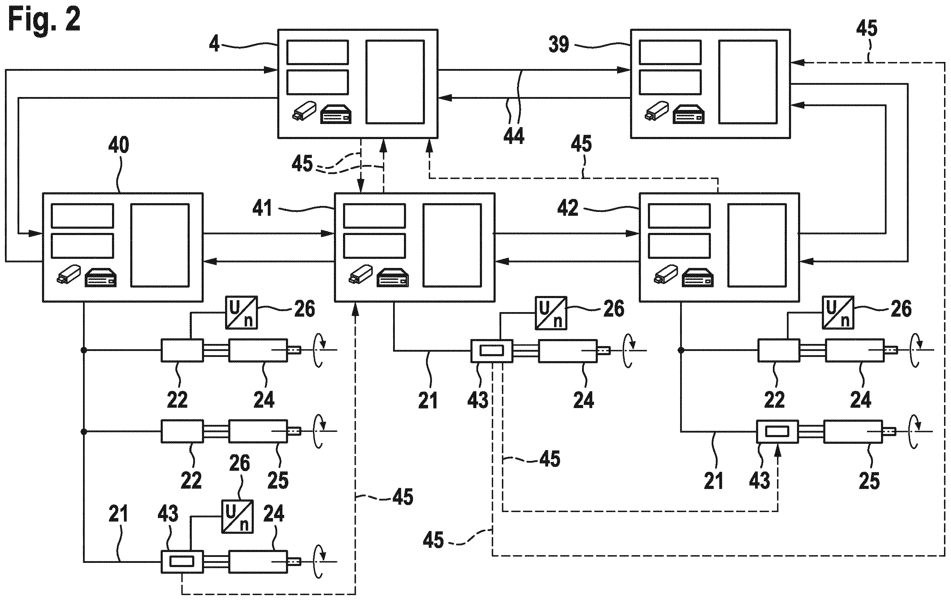

Figur 2 zeigt eine schematische Prinzipdarstellung eines mechatronischen Systems 2 mit Komponenten der Industrieautomatisierung, die über einen Feldbus 44 untereinander und mit anderen Netzwerkteilnehmern kommunizieren. Im Einzelnen sind mittels einer Feldbus-Ringtopologie 44 mehrere Maschinensteuerungen 4,39,40,41,42 (gemeinsam im Folgenden der Einfachheit halber als 4+ bezeichnet) untereinander in Echtzeit kommunizierend verbunden; dabei kann es sich beispielsweise um einen Sercos-Feldbus, einen EtherCAT-Feldbus, einen Profinet-Feldbus oder einen auf TSN basierenden Feldbus oder schlicht um ein echtzeitfähiges TSN-Netzwerk handeln. Im gezeigten Ausführungsbeispiel ist die Feldbus-Ringtopologie 44 ein gegenläufiger Doppelring, um etwa eine Redundanz bereitzustellen, die für Sicherheits-Anwendungen geeignet ist. Als Alternative dazu kann bei TSN eine Sterntopologie (oder beliebige andere Topologie) unter Verwendung eines TSN-fähigen Switch realisiert werden. Zum Aufbau der Steuerungen 4+ siehe jeweils die Ausführungen oben zur Figur 1. An die Maschinensteuerungen 4,39 sind keine weiteren, gezeigten Komponenten der Industrieautomatisierung angeschlossen; beispielsweise kann die Maschinensteuerung 4 als Master fungieren. An die Maschinensteuerung 40 ist über ein Echtzeit-Kommunikationsmedium, nämlich einen Feldbus 21 ein Antriebsregler 43 mit integrierter Maschinensteuerung (z.B. SPS) angeschlossen. Ansonsten sind noch zwei Antriebsregler 22, die jeweils einen Servomotor 24 bzw. einen Elektromotor 25 beaufschlagen, angeschlossen. An die Maschinensteuerung 41 ist lediglich über den Feldbus 21 ein Antriebsregler 43 mit integrierter Maschinensteuerung angeschlossen, der einen Servomotor 24 mit einem Drehzahlgeber 26 beaufschlagt; über den Drehzahlgeber 26 wird die Drehzahl 1 jeweils an den Antriebsregler 43 zurückgeliefert. Schließlich sind an die Maschinensteuerung 42 ein Antriebsregler 22 mit angeschlossener Servomotor 24/Drehzahlgeber 26-Kombination sowie ein Antriebsregler 43 mit integrierter Maschinensteuerung und davon beaufschlagtem Elektromotor 25 angeschlossen.

Zusätzlich sind erfindungsgemäß Publish-/Subscribe-Kommunikationspfade 45 gezeigt, die virtuell oder physikalisch realisiert sein können. Sie können beispielsweise über die Feldbus-Ringtopologie 44 physikalisch umgesetzt sein oder über hier nicht gezeigte, weitere Kommunikationsverbindungen. Die Maschinensteuerung 4 ist als Publisher konfiguriert und sendet Steuerungsdaten, die von der diesbezüglich als Subscriber konfigurierten Maschinensteuerung 41 über den Kommunikationspfad 45 bezogen werden. Simultan ist die Maschinensteuerung 4 als Subscriber von Steuerungsdaten 1 konfiguriert, die von der Maschinensteuerung 41, die diesbezüglich als Publisher konfiguriert ist, bezogen werden. Gleichzeitig bezieht die Maschinensteuerung 4 - als Subscriber konfiguriert - von der Maschinensteuerung 42 als Publisher veröffentlichte Steuerungsdaten. Steuerungsdaten können erfindungsgemäß auch von Antrieben 22,43 kommuniziert werden. Dazu ist die Maschinensteuerung 39 als Subscriber von Steuerungsdaten 1 konfiguriert, die von dem Antriebsregler 43 mit integrierter Maschinensteuerung, der über den Feldbus 21 an die Maschinensteuerung 41 angeschlossen ist, als Publisher veröffentlicht werden. Gleichzeitig bezieht auch der Antriebsregler 43, der an die Maschinensteuerung 42 angeschlossen ist, von diesem Antriebsregler 43, der an die Maschinensteuerung 41 angeschlossen ist, Steuerungsdaten 1. Schließlich ist der Antriebsregler 43, der an die Maschinensteuerung 40 angeschlossen ist, als Publisher konfiguriert und veröffentlicht Steuerungsdaten, die (unter anderem) von der insofern als Subscriber konfigurierten Maschinensteuerung 41 über den Kommunikationspfad 45 empfangen werden. Vorzugsweise erfolgt sowohl die direkte Kommunikation über die Feldbus-Ringtopologie 44 als auch die Kommunikation über die gezeigten Publish-/Subscribe-Kommunikationspfade 45 in Echtzeit.

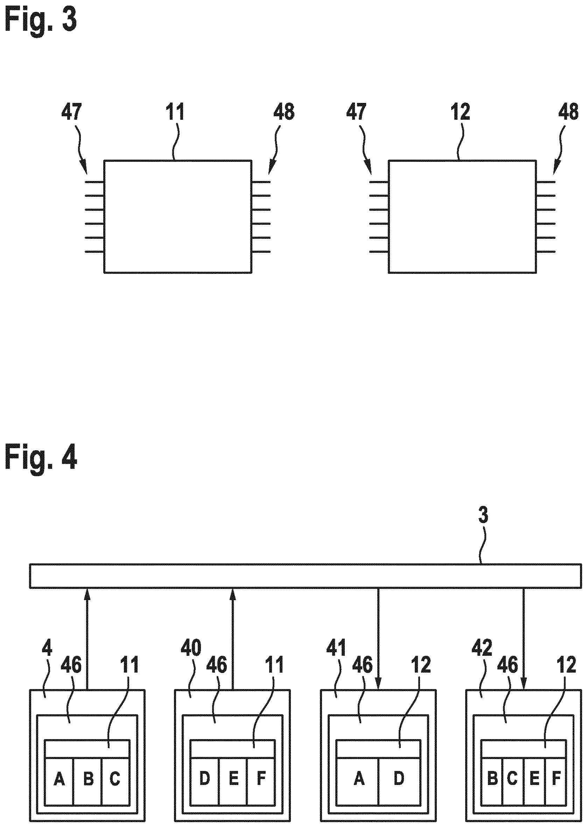

Figur 3 zeigt eine grob schematische Ansicht einer modularen Implementierung der Erfindung. Auf der linken Seite der Figur 3 ist ein Publisher-Modul 11 gezeigt, welches in einer Maschinensteuerung 4 als Hardware- oder Software-Modul ausgeführt sein kann. Es handelt sich insbesondere um einen Funktionsbaustein nach IEC 61131-3, zum Beispiel einer SPS. Das Publisher-Modul 11 verfügt über Moduleingänge 47 und Modulausgänge 48. Handelt es sich um einen Funktionsbaustein einer SPS, so werden über die Moduleingänge 47 Variablen - auch statische Variablen - des Funktionsbausteins vorbelegt. Die Verarbeitung im Sinne der Erfindung (zum Beispiel die Konfiguration der Maschinensteuerung als Publisher, die Bereitstellung der zu publizierenden Daten, deren Verarbeitung, wie beispielsweise deren Enkodierung als Netzwerknachricht) erfolgen in dem Publishermodul 11. Insbesondere ist das Publishermodul 11 individuell aufrufbar und kann die Maschinensteuerung 4 als Publisher konfigurieren und/oder die Steuerungsdaten 1 mit dem Nachrichten-Identifikator 7 versehen und/oder mittels des Datenaustauschstandards als Netzwerknachricht 5 konfigurieren. Nach der erfindungsgemäßen Verarbeitung werden die auszugebenden Steuerungsdaten 1 als Netzwerknachricht 5 enkodiert an den Modulausgängen 48 des Publishermoduls 11 bereitgestellt. Auf diese Weise kann das Publishermodul 11 flexibel innerhalb einer Maschinensteuerung 4 verwendet werden.

Auf der rechten Seite der Figur 3 ist ein Subscribermodul 12 gezeigt, für das die obigen Ausführungen entsprechend gelten. Auch das Subscribermodul 12 verfügt jeweils über Moduleingänge 47 und Modulausgänge 48, an denen die entsprechenden Daten anliegen. Beim Subscribermodul 12 liegen beispielsweise an den Eingängen die Steuerungsdaten 1 in Form einer zu empfangenden Netzwerknachricht 5 kodiert an. Es können aber auch generell alle Netzwerknachrichten 5, die von der entsprechenden Maschinensteuerung 4 empfangen werden können, an den Eingängen 47 anliegen, sodass die entsprechende Differenzierung nach relevanten Netzwerknachrichten 5 bzw. Steuerungsdaten 1 auch bei der Datenverarbeitung im Subscribermodul 12 erfolgt. Dann würden beispielsweise aus den an den Eingängen 47 anliegenden Netzwerknachrichten 5 die bei der Konfiguration der Maschinensteuerung 4 als Subscriber festgelegten Steuerungsdaten 1 bzw. Netzwerknachrichten 5 identifiziert oder extrahiert werden. Insbesondere ist das individuell aufrufbare Subscribermodul 12 dazu eingerichtet, die Maschinensteuerung 4 als Subscriber zu konfigurieren, eine mittels des Nachrichten-Identifikators 7 für den Subscriber bestimmte Netzwerknachricht 5 zu identifizieren und zu selektieren und/oder diese mittels des Datenaustauschstandards als Steuerungsdaten 1 zu dekodieren. An den Ausgängen 48 des Subscribermoduls 12 liegen dann die aus der entsprechenden Netzwerknachricht 5 dekodierten Steuerungsdaten 1 an.

Figur 4 zeigt eine Prinzipskizze einer beispielhaften Konfiguration einer Publish-/Subscribe-Infrastruktur gemäß der Erfindung. Dazu sind vier Maschinensteuerungen 4,40,41,42 gezeigt, die über eine nicht näher spezifizierte Netzwerk 3-Infrastruktur kommunizieren. Jede der Maschinensteuerungen 4,40,41,42 hat eine Steuerungs-Applikation 46 bzw. SPS-Applikation 46, die man als OPC-UA Applikation bezeichnen kann. Dadurch wird die betreffende Steuerung zur OPC-UA-Steuerung. Mittels der betreffenden OPC-UA Applikation 46 wird die Konfiguration der betreffenden Maschinensteuerungen 4,40,41,42 bewirkt, beispielsweise über einen Bediener oder auch automatisiert. Die Maschinensteuerungen 4,40 sind als Publisher konfiguriert; daher ist bei diesen Maschinensteuerungen 4,40 jeweils das Publishermodul 11 aktiv und in der Figur 4 gezeigt. Die Maschinensteuerungen 41,42 sind als Subscriber konfiguriert; daher ist bei diesen Maschinensteuerungen 41,42 jeweils das Subscribermodul 12 aktiv und in der Figur 4 gezeigt. Zur besseren Verständlichkeit der Darstellung sind spezifizierte/konfigurierte Steuerungsdaten 1 bzw. Steuerungsdaten-Klassen symbolisch als A, B, C, D, E, F angegeben. Die Steuerungsdaten A, B, C, D, E, F repräsentieren dabei für die erfindungsgemäße Publish-/Subscribe-Kommunikationsarchitektur konfigurierte Arten, Umfänge, Klassen oder Kategorien von Steuerungsdaten 1 oder die Steuerungsdaten 1 selber.

Die Maschinensteuerung 4 publiziert die Steuerungsdaten A, B, C; diese werden an die Netzwerk 3-Infrastruktur im Sinne der Erfindung als Netzwerknachricht 5 encodiert übergeben, wo sie prinzipiell für beliebige und insbesondere von der Maschinensteuerung 4 entkoppelte Subscriber zugänglich sind. Dies bietet eine einerseits flexible und andererseits sehr effiziente Kommunikationsmöglichkeit für industrielle Steuerungsdaten 1, die aus einem mechatronischen System 2 stammen oder in ein mechatronisches System 2 eingespeist werden. Die Maschinensteuerung 40 ist ebenfalls als Publisher konfiguriert und veröffentlicht die Steuerungsdaten D, E, F. Das bezüglich der Maschinensteuerung 4 oben Gesagte gilt hier sinngemäß. In der gezeigten Konfiguration sind somit in praktisch dem gesamten Netzwerk 3 sämtliche Steuerungsdaten A, B, C, D, E, F für sämtliche Maschinensteuerungen 4,40,41,42 als Netzwerkteilnehmer verfügbar. Beispielhaft ist gezeigt, dass zwei weitere Maschinensteuerungen 41,42 jeweils als Subscriber konfiguriert sind. Die Maschinensteuerung 41 bezieht aus dem Netzwerk 3 die Steuerungsdaten A, D, während die Maschinensteuerung 42 die Steuerungsdaten B, C, E, F empfängt.

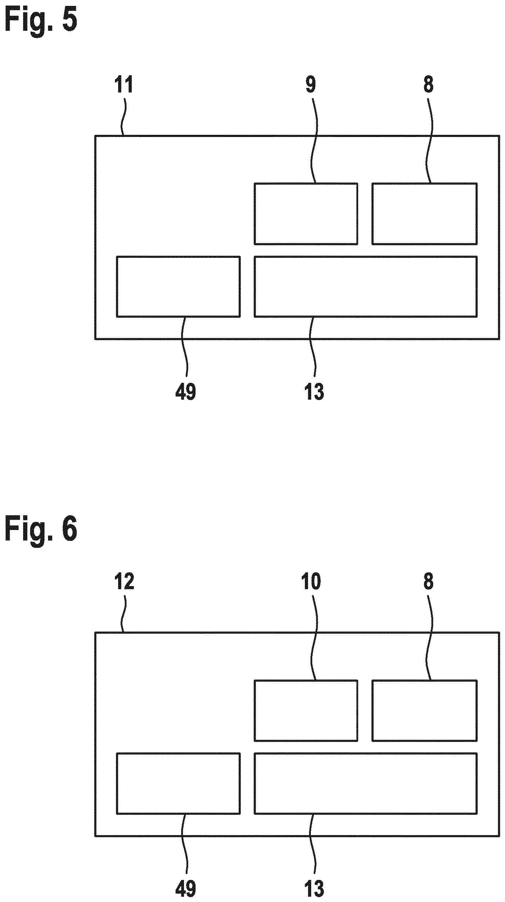

Figur 5 zeigt den schematischen Aufbau eines erfindungsgemäßen Publishermoduls 11. Das Publishermodul 11 hat ein Dienstgüte-Diagnosemodul 8, in welchem eine Quality-of-Service-Diagnose des Netzwerkdienstes, über das die Publish-/Subscribe-Kommunikation abgewickelt wird, erfolgt. Es hat auch ein Encodermodul 9 zum Encodieren der Steuerungsdaten 1 zur Netzwerknachricht 5. Des Weiteren ist ein Konfigurationsmodul 49 vorgesehen, in welchem die Konfiguration erfolgt oder zur erfindungsgemäßen Kommunikation bereitgestellt, vorbereitet und schlussendlich verwendet wird. Schließlich verfügt das gezeigte Publishermodul 11 noch über ein in das Publishermodul 11 integriertes Netzwerkdienst-Modul 13 welches bei der als Publisher konfigurierten Maschinensteuerung 4 die Netzwerknachricht 5 über das Netzwerk 3 sendet.

Figur 6 zeigt ein Subscribermodul 12 in analoger Darstellung; sinngemäß gilt das unter der Figur 5 zum Publishermodul 11 ausgeführte entsprechend. Demgegenüber verfügt das Subscribermodul 12 über ein Decodermodul 10, welches die empfangene Netzwerknachricht 5 mittels des Datenaustauschstandards als Steuerungsdaten 1 dekodiert. In dem Dienstgüte-Diagnosemodul 8 erfolgt wiederum eine Diagnose der Quality-of-Service des verwendeten Netzwerkes, und zwar insbesondere anhand der Qualität der jeweils empfangenen und ausgewerteten Netzwerknachrichten 5. Das gezeigte Netzwerkdienst-Modul 13 hat die Aufgabe, als individuell aufrufbares und in das Subscribermodul 12 integriertes Modul die Netzwerknachricht 5 über das Netzwerk 3 zu empfangen.

Im Einzelnen funktioniert die Erfindung unter gleichzeitiger Bezugnahme auf die Figuren 5 und 6 wie folgt:
- das Encodermodul 9 enkodiert die Daten und erzeugt eine Netzwerknachricht 5, beispielsweise entsprechend dem UADP-Protokoll
- das Decodermodul 10 dekodiert die Netzwerknachricht 5 und gibt die dekodierten Steuerungsdaten 1 als verwertbare Daten zurück
- das Diagnosemodul 8 wertet die Quality-of-Service in den jeweiligen Netzwerknachrichten 5 aus und liefert eine Struktur zurück mit Informationen bezüglich dieser Netzwerkgüte-Auswertung
- das Netzwerkdienst-Modul sendet bzw. empfängt die Netzwerknachrichten; es ist derart konfigurierbar, dass man zwischen etwa TSN, UDP und Raw Ethernet frei auswählen/konfigurieren kann
- das Konfigurationsmodul 49 (beispielsweise ein Funktionsbaustein einer SPS oder ein integriertes Modul) ist über Mechanismen des Datenaustauschstandards, insbesondere über standardisierte OPC-UA Mechanismen konfigurierbar, vorzugsweise auch online bzw. remote.

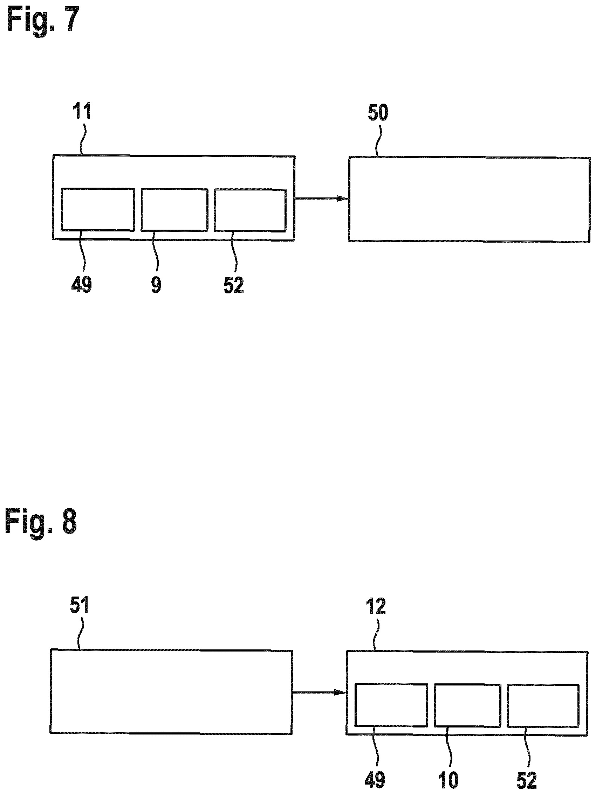

Bezugnehmend auf die Figuren 7 und 8 gilt das oben bezüglich der Figuren 5 und 6 ausgeführte entsprechend. In den Figuren 7 und 8 ist jedoch im Gegensatz dazu ein separates Netzwerkdienst-Sendermodul 50 bzw. Netzwerkdienst-Empfänger Modul 51 vorgesehen; diese Module können jeweils als Funktionsbaustein einer SPS realisiert sein und individuell aufgerufen werden. Im gezeigten Ausführungsbeispiel der Figur 7 ist ein Publishermodul 11 vorgesehen, welches ein Konfigurationsmodul 49, das Encodermodul 9 und ein Diagnosemodul 52 aufweist. Die aus dem Publishermodul 11 solchermaßen generierte Netzwerknachricht 5 wird (unter anderem) an das Netzwerkdienst-Sendermodul 50 übergeben und von diesem über das Netzwerk 3 entsprechend zur Verfügung gestellt bzw. veröffentlicht bzw. gesendet.

In Figur 8 wird die Netzwerknachricht 5 von dem Netzwerkdienst-Empfänger-Modul 51 empfangen und an das Subscribermodul 12 weitergegeben, in dem die Konfiguration, die Dekodierung und die Quality-of-Service-Diagnose in den dort gezeigten Modulen erfolgt.

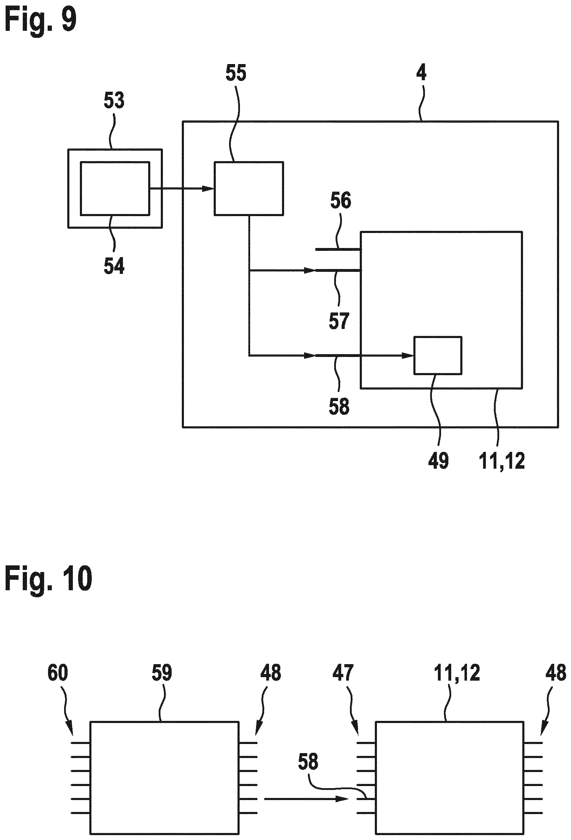

Figur 9 zeigt eine beispielhafte Umsetzung einer Konfigurationsmöglichkeit für die erfindungsgemäße Publish-/Subscribe-Kommunikation. Dazu ist auf einem PC 53 ein OPC-UA-Client 54 installiert, der in der Figur 9 als Applikationsinstanz dargestellt ist. Von einer solchen Applikation kann durch lokalen Anschluss an eine Steuerung 4 oder über eine Netzwerkkommunikation mit der Steuerung 4 (was in der Figur 9 jeweils durch einen einfachen Pfeil symbolisiert ist) eine Konfiguration der Maschinensteuerung 4 als Publisher und/oder als Subscriber vorgenommen werden. Dazu läuft auf der Maschinensteuerung 4 ein OPC-UA-Server 55, der für die OPC-UA-konforme Kommunikation von Konfigurationsinformationen vorgesehen ist.

Die Konfigurationsinformationen werden - sobald sie vom OPC-UA-Server 55 empfangen und ausgewertet worden sind - jeweils an ein Publishermodul 11 bzw. ein Subscribermodul 12 über einen Neukonfigurations-Eingang 57 weitergegeben. Dazu sind die Eingänge des Publishermoduls 11 bzw. des Subscribermoduls 12 entsprechend eingerichtet. Sie weisen zudem noch einen Execute-Eingang 56 auf sowie einen weiteren Eingang 58, der die Publish-/Subscribe-Struktur aufnimmt (der Publish-/Subscribe-Struktur-Eingang 58). Der Publish-/Subscribe-Struktur-Eingang 58 gibt die empfangenen Strukturdaten an ein integriertes Konfigurationsmodul 49 weiter, wo sie entsprechend weiterverarbeitet bzw. ausgewertet oder angewendet werden.

Bezugnehmend auf Figur 9 ist die Funktionsweise der gezeigten online- oder Remote-Konfiguration folgendermaßen:
Der OPC-UA-Server 55 veröffentlicht das entsprechende Modul bzw. die Existenz und die Informationen über das entsprechende Modul 11,12 oder die vorhandene Publish-/Subscribe-Struktur und/oder die dem Neukonfigurations-Eingang 57 entsprechende Logikvariable "Neukonfiguration". Auf diese Weise wird zunächst die Publish-/Subscribe-Struktur geändert/neu angelegt/gelöscht; ist dies erfolgt, setzt man - manuell oder automatisch - die Logikvariable am Neukonfigurations-Eingang 57 auf "WAHR" (TRUE). Dadurch wird die Konfiguration des entsprechenden Funktionsmoduls 11/12 geändert. Ein Nebeneffekt einer solchen Konfiguration kann es sein, dass einer oder mehrere Zyklen bei der Kommunikation ausfallen. Diesem kurzzeitigen Ausfall der Kommunikation wird ebenfalls in dem jeweiligen Funktionsbaustein bzw. Funktionsmodul 11/12 Rechnung getragen, beispielsweise indem eine diesbezügliche Statusinformation gesetzt bzw. kommuniziert wird, die bei den Teilnehmern entsprechende Reaktionen auslöst. Die Konfiguration bzw. das Konfigurationsmodul 49 kann dabei jeweils remote und/oder direkt in der Maschinensteuerung 4 und/oder online erfolgen. Alternativ oder zusätzlich erfolgt die Konfiguration zur Laufzeit der Maschinensteuerung 4.

Figur 10 zeigt schematisch am Beispiel eines Publishermoduls 11 bzw. eines Subscribermoduls 12 eine automatisierte oder teilautomatisierte Unterstützung bei der Konfiguration einer erfindungsgemäßen Publish-/Subscribe-Kommunikationsarchitektur. Dazu ist wiederum ein Konfigurations-Unterstützungs-Modul 59 vorgesehen, an dessen Eingängen 60 für die vereinfachte Konfiguration jeweils reduzierte Kommunikationsparameter anliegen bzw. ein reduzierter bis minimaler Satz von Konfigurationsparametern. Nachdem diese reduzierten (vereinfachten) Kommunikationsparameter in das Konfigurations-Unterstützungs-Modul 59 eingelesen worden sind, werden sie dort entsprechend zu einer vollständigen bzw. ausreichenden Menge an Kommunikationsparametern ergänzt, sodass an den Modulausgängen 48 jeweils eine vollständige bzw. ausreichende Kommunikationsstruktur für die Publish-/Subscribe-Konfiguration anliegt. Diese Konfigurationsstruktur wird über die entsprechenden Ausgänge des Moduls 59 an das entsprechende Funktionsmodul 11/12 weitergegeben, und zwar über dessen jeweiligen Publish-/Subscribe-Struktur-Eingang 58.

Der reduzierte Satz von Parametern, der an den Eingängen 60 für die vereinfachte Konfiguration anliegt, kann extern - beispielsweise von einem Benutzer - vorgegeben werden. Dadurch werden die relevanten Parameter auf einfache Weise bei der Konfiguration durch externe Eingaben (beispielsweise durch Benutzereingaben) gesetzt. Ergänzend dazu sieht die Erfindung vor, dass das Konfigurations-Unterstützungs-Modul 59 vorbestimmte Kommunikationsparameter bei der Konfiguration automatisch ergänzt bzw. vorbelegt (automatisierte Kommunikationsparameter).

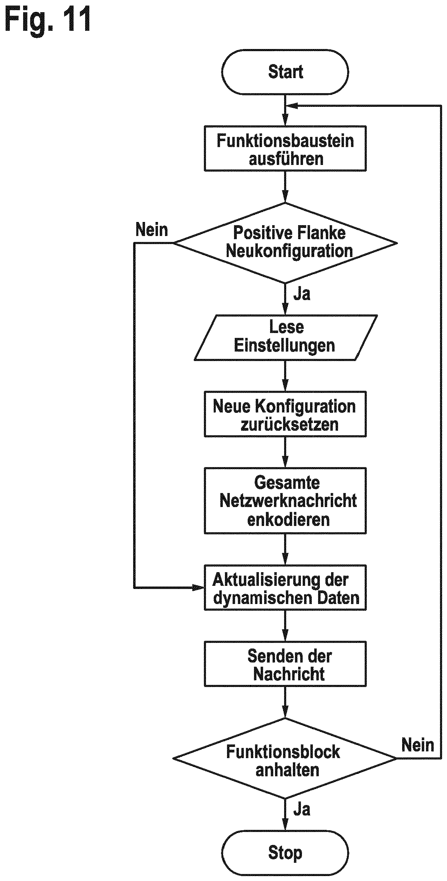

Insbesondere für einen Echtzeitbetrieb der Erfindung kann eine im Hinblick auf die zeitliche Effizienz bzw. den zeitlichen Ablauf optimierte oder maßgeblich verbesserte Durchführung des Verfahrens vorgesehen sein. Dazu ist in Figur 11 ein grob schematisches Ablaufdiagramm angegeben. Demzufolge wird nach dem Start des erfindungsgemäßen Verfahrens ein Modul - insbesondere ein Funktionsbaustein - aufgerufen und ausgeführt; dabei kann es sich beispielsweise um ein erfindungsgemäßes Publishermodul 11, Subscribermodul 12 (jeweils mit integriertem Konfigurationsmodul 49) oder auch um ein separates Konfigurationsmodul 49 handeln, welches mit einem solchen Publishermodul 11 und/oder Subscribermodul 12 in Verbindung steht. Erfindungsgemäß wird zur Laufzeit abgetastet, ob eine Neukonfiguration vorliegt (dies ist dann der Fall, wenn der Eingang Neukonfiguration 57 (siehe Figur 9) positiv ist bzw. bei einem Funktionsbaustein einer SPS eine positive Flanke aufweist). Ist dies nicht der Fall (Neukonfiguration=FALSCH (FALSE)) so wird direkt auf eine reduzierte bis minimale Aktualisierungs-Aktivität verzweigt, die auf lediglich die dynamischen Steuerungsdaten 1 wirkt bzw. nur diese aktualisiert. Ist Neukonfiguration=WAHR (TRUE), so werden - beispielsweise von dem Publish-/Subscribe-Struktur-Eingang 58 - die Neukonfigurations-Einstellungen ausgelesen, daraufhin die Konfiguration zurückgesetzt und die neue Konfiguration geladen bzw. gesetzt. Daraufhin wird die gesamte, aktuell anliegende Netzwerknachricht enkodiert/dekodiert, woraufhin wiederum die dynamischen Daten reduziert aktualisiert werden. Nach diesem Schritt erfolgt das Senden der entsprechenden Netzwerknachricht 5. Daraufhin erfolgt eine Abfrage, ob es für das betreffende Funktionsmodul 11,12,49 noch anhängige Tasks gibt; in der Figur 11 ist dies durch die Abfrage "Funktionsblock anhalten" repräsentiert. Ist das Ergebnis positiv (keine weiteren Tasks mehr anhängig) wird das Verfahren gestoppt; andernfalls wird verzweigt zu dem betreffenden Funktionsmodul 11,12,49.

Schließlich zeigt die Figur 12 ein Dienstgüte-Diagnosemodul 8 (dies kann auch ein integraler Bestandteil eines Publishermoduls 11 und/oder eines Subscribermoduls 12 sein). Das Dienstgüte-Diagnosemodul 8 hat wiederum Moduleingänge 47 und Modulausgänge 48; an einem der Moduleingänge 47 liegt eine Netzwerknachricht 5 an, deren Struktur schematisch in der Figur 12 angegeben ist. Demnach umfasst die Netzwerknachricht 5 einen Header 62, der Informationen wie etwa Routing-Informationen der Netzwerknachricht 5 und/oder auch den erfindungsgemäßen Nachrichten-Identifikator 7 enthält. Weiter in der Struktur der Netzwerknachricht 5 folgt die Payload 63, die im Wesentlichen den Nutzinhalt der Netzwerknachricht 5, also die erfindungsgemäßen Steuerungsdaten 1 aufweist. Des Weiteren ist in der Struktur der Netzwerknachricht 5 ein Anteil für Dienstgüte-Daten 64 vorgesehen, bevor die Netzwerknachricht mit dem Tail 65 (das ist das Ende der Netzwerknachricht 5) abschließt. Die Netzwerknachricht 5 wird entsprechend in dem Funktionsmodul 8,11,12 ausgewertet; dabei werden auch die Dienstgüte-Daten 64 ausgelesen und zu einer Dienstgüte-Diagnosestruktur 61 bzw. zu einem Dienstgüte-Diagnoseresultat 61 verarbeitet, welches an einem der Modulausgänge 48 des Funktionsmoduls 8,11,12 ausgegeben wird.

Die Dienstgüte-Daten 64 umfassen insbesondere: einen Zeitstempel mit Minimalzeit, Maximalzeit, Durchschnittszeit, Zeit des Empfangs/Sendens der letzten Nachricht; eine Sequenznummer; einen Fehlerzähler; eine Angabe über die seit dem letzten, verlorenen Paket vergangene Zeit; einen Status mit Anzeige des Statuscodes der Netzwerknachricht 5; eine Versionsangabe mit Versionsüberprüfung.

### Bezugszeichenliste

- 1: Drehzahl
- 2: mechatronisches System
- 3: Netzwerk
- 4: Maschinensteuerung
- 5: Netzwerknachricht
- 6: Industrie-PC
- 7: Nachrichten-Identifikator
- 8: Dienstgüte-Diagnosemodul
- 9: Encodermodul
- 10: Decodermodul
- 11: Publishermodul
- 12: Subscribermodul
- 13: Netzwerkdienst-Modul
- 14: speicherprogrammierbare Steuerung
- 15: CNC (Computer Numeric Control)
- 16: Display
- 17: USB-Stick
- 18: Festplatte/SSD
- 19: Systemzeit
- 20: Drahtlos-Überträger
- 21: Feldbus
- 22: Antriebsregler
- 23: Antriebsregler
- 24: Servomotor
- 25: Elektromotor
- 26: Drehzahlgeber
- 27: asynchrones Netzwerksegment
- 28: Publisherpfad (Maschinensteuerungssicht)
- 29: Subscriberpfad (Maschinensteuerungssicht)
- 30: OPC-UA-konforme Applikationsinstanz
- 31: PC-Applikation für Steuerungsdaten
- 32: Festplatte/SSD
- 33: CD/DVD
- 34: Office-PCs
- 35: Edge-Computing-System
- 36: Notebook
- 37: Tablet
- 38: PC
- 39: Maschinensteuerung
- 40: Maschinensteuerung
- 41: Maschinensteuerung
- 42: Maschinensteuerung
- 43: Antriebsregler mit integrierter Maschinensteuerung
- 44: Feldbus-Ringtopologie
- 45: Publish-/Subscribe-Kommunikationspfad zwischen Steuerungen
- 46: Steuerungs-Applikation/SPS-Applikation
- 47: Moduleingänge
- 48: Modulausgänge
- 49: Konfigurationsmodul
- 50: Netzwerkdienst-Sendermodul
- 51: Netzwerkdienst-Empfängermodul
- 52: Diagnosemodul
- 53: PC
- 54: OPC-UA-Client
- 55: OPC-UA-Server
- 56: Execute-Eingang
- 57: Neukonfigurations-Eingang
- 58: Publish-/Subscribe-Struktur-Eingang
- 59: Konfigurations-Unterstützungs-Modul
- 60: Eingänge für vereinfachte Konfiguration
- 61: Diagnoseresultat und Diagnosestruktur
- 62: Header
- 63: Payload
- 64: Dienstgüte-Daten
- 65: Tail
- 66: Cloud
- A, B, C, D, E, F: spezifizierte/konfigurierte Steuerungsdaten/Steuerungsdatenklassen

## Patentansprüche

1. Verfahren der Kommunikation von Maschinensteuerungsdaten (1) eines mechatronischen Systems (2) in einem Netzwerk (3) mit
zumindest einem Publisher-Netzwerkteilnehmer (4,6), der die Steuerungsdaten (1) mittels eines Datenaustauschstandards, der ein Publish-/Subscribe-Kommunikationsmodell unterstützt, über das Netzwerk (3) sendet und
mit zumindest einem Subscriber-Netzwerkteilnehmer (6,4), der die Steuerungsdaten (1) mittels des Datenaustauschstandards über das Netzwerk (3) empfängt,
wobei der Publisher-Netzwerkteilnehmer die Übertragung in Form von Netzwerknachrichten (5) vornimmt, die jeweils für bedarfsweise auswählbare, vom Publisher-Netzwerkteilnehmer entkoppelte Subscriber-Netzwerkteilnehmer vorgesehen sind, und
der Subscriber-Netzwerkteilnehmer eine Netzwerknachricht (5) mit seinen zu beziehenden Steuerungsdaten (1), jeweils vorzugsweise ereignisgesteuert, selektiv erhält oder auswählt und/oder die zu beziehenden Steuerungsdaten (1) aus einer Netzwerknachricht (5) selektiv entnimmt,
wobei eine Maschinensteuerung (4) als Netzwerkteilnehmer in das Netzwerk (3) eingebunden ist, die zur Kommunikation der Steuerungsdaten (1) wahlfrei als Subscriber-Netzwerkteilnehmer und als Publisher-Netzwerkteilnehmer konfiguriert werden kann, **dadurch gekennzeichnet, dass**
die Maschinensteuerung (4) eine speicherprogrammierbare Steuerung und/oder eine Computer Numeric Control des mechatronischen Systems ist, die zur Kommunikation von Steuerungsdaten (1) als Subscriber-Netzwerkteilnehmer und als Publisher-Netzwerkteilnehmer konfiguriert ist und an der Maschinensteuerung (4) anliegende Steuerungsdaten (1) im gesamten Netzwerk (3) kommuniziert,
wobei die Maschinensteuerung (4) als Publisher-Netzwerkteilnehmer Steuerungsdaten (1) mit einem Nachrichten-Identifikator (7) versieht, mittels des Datenaustauschstandards als Netzwerknachricht (5) enkodiert und die Netzwerknachricht (5) über das Netzwerk (3) sendet und
die Maschinensteuerung (4) als Subscriber-Netzwerkteilnehmer eine mittels eines Nachrichten-Identifikators (7) für den Subscriber-Netzwerkteilnehmer bestimmte Netzwerknachricht (5) über das Netzwerk (3) empfängt und mittels des Datenaustauschstandards als Steuerungsdaten dekodiert, und
wobei ein als Subscriber-Netzwerkteilnehmer konfigurierter Antriebsregler (22) im mechatronischen System vorhanden ist, der als Subscriber-Netzwerkteilnehmer Steuerungsdaten (1) von der Maschinensteuerung (4) empfängt.

2. Verfahren nach Anspruch 1, **dadurch gekennzeichnet, dass** die Maschinensteuerung (4) als Publisher-Netzwerkteilnehmer die zu enkodierenden Steuerungsdaten (1) und/oder die enkodierte Netzwerknachricht (5) bzw. dass die Maschinensteuerung (4) als Subscriber-Netzwerkteilnehmer die empfangene Netzwerknachricht (5) und/oder die dekodierten Steuerungsdaten (1) in einem bezüglich der Maschinensteuerung (4) statischen und/oder nicht temporären und/oder globalen Speicherbereich bereitstellt.

3. Verfahren nach Anspruch 1 oder 2, **dadurch gekennzeichnet, dass** die Enkodierung bzw. die Dekodierung mit Methoden des Datenaustauschstandards erfolgt.

4. Verfahren nach einem der Ansprüche 1 bis 3, **dadurch gekennzeichnet, dass** die Kommunikation der Steuerungsdaten (1) und/oder die Art und/oder der Inhalt und/oder der Umfang der kommunizierten Steuerungsdaten (1) zur Laufzeit und/oder remote und/oder in der Maschinensteuerung (4) konfiguriert werden kann.

5. Verfahren nach Anspruch 4, **dadurch gekennzeichnet, dass** vorbestimmte Kommunikationsparameter bei der Konfiguration automatisch von der Maschinensteuerung (4) vorbelegt werden.

6. Verfahren nach Anspruch 4 oder 5, **dadurch gekennzeichnet, dass** vorbestimmte Kommunikationsparameter bei der Konfiguration durch externe Setzung, insbesondere durch Benutzereingaben, bei der Konfiguration festgelegt werden.

7. Verfahren nach einem der Ansprüche 4 bis 6, **dadurch gekennzeichnet, dass** die Konfiguration über Methodenaufrufe des Datenaustauschstandards von Methoden in der Maschinensteuerung (4) erfolgt.

8. Verfahren nach einem der Ansprüche 1 bis 7, **dadurch gekennzeichnet, dass** die Kommunikation der Steuerungsdaten (1) in Echtzeit erfolgt.

9. Verfahren nach einem der Ansprüche 1 bis 8, **dadurch gekennzeichnet, dass** eine Quality-of-Service-Diagnose (8) der Netzwerknachricht (5) durch einen Funktionsbaustein der Maschinensteuerung (4) erfolgt.

10. Verfahren nach einem der Ansprüche 1 bis 9, **dadurch gekennzeichnet, dass** die Enkodierung (9) und die Dekodierung (10) unter Verwendung eines standardisierten Kodierungsformates erfolgt, insbesondere mit Java Script Object Notation, JSON, oder Unified Architecture Datagram Packet, UADP.

11. Verfahren nach einem der Ansprüche 1 bis 10, **dadurch gekennzeichnet, dass** ein individuell aufrufbares Publishermodul (11) die Maschinensteuerung (4) als Publisher-Netzwerkteilnehmer konfiguriert, die Steuerungsdaten (1) mit dem Nachrichten-Identifikator (7) versieht und mittels des Datenaustauschstandards als Netzwerknachricht (5) enkodiert.

12. Verfahren nach einem der Ansprüche 1 bis 11, **dadurch gekennzeichnet, dass** ein individuell aufrufbares Subscribermodul (12) die Maschinensteuerung (4) als Subscriber-Netzwerkteilnehmer konfiguriert und eine mittels des Nachrichten-Identifikators (7) für den Subscriber-Netzwerkteilnehmer bestimmte Netzwerknachricht (5) mittels des Datenaustauschstandards als Steuerungsdaten (1) dekodiert.

13. Verfahren nach einem der Ansprüche 11 oder 12, **dadurch gekennzeichnet, dass** ein, insbesondere individuell aufrufbares oder in ein anderes Modul (11,12) integriertes, Netzwerkdienst-Modul (13) die Netzwerknachricht (5) bei einer als Subscriber-Netzwerkteilnehmer konfigurierten Maschinensteuerung (4) über das Netzwerk (3) empfängt bzw. bei einer als Publisher-Netzwerkteilnehmer konfigurierten Maschinensteuerung (4) die Netzwerknachricht (5) über das Netzwerk (3) sendet.

14. Computerprogrammprodukt für eine Rechnereinrichtung, insbesondere für eine Maschinensteuerung (4), welches bei Ausführung auf einer Rechnereinrichtung (4,6) ein Verfahren nach einem der Ansprüche 1 bis 13 ausführt.

15. Funktionsbaustein (11,12,13) oder mehrere Funktionsbausteine einer speicherprogrammierbaren Maschinensteuerung (4), welcher/welche dazu eingerichtet ist/sind, ein Verfahren nach einem der Ansprüche 1 bis 13 auszuführen.

16. Maschinensteuerung (4) umfassend einen oder mehrere Funktionsbausteine (11,12,13) nach Anspruch 15.

## Claims

1. Method for communicating machine control data (1) of a mechatronic system (2) in a network (3) having
at least one publisher network user (4, 6) that sends the control data (1) via the network (3) by means of a data interchange standard that supports a publish/subscribe communication model and
having at least one subscriber network user (6, 4) that receives the control data (1) via the network (3) by means of the data interchange standard,
wherein the publisher network user performs the transmission in the form of network messages (5) that are each intended for subscriber network users decoupled from the publisher network user that are selectable as required, and
the subscriber network user selectively obtains or selects a network message (5) with its control data (1) to be procured, in each case preferably under event control, and/or selectively takes the control data (1) to be procured from a network message (5),
wherein a machine controller (4) is incorporated in the network (3) as a network user, which machine controller can be randomly configured as a subscriber network user and as a publisher network user in order to communicate the control data (1),
**characterized in that**
the machine controller (4) is a programmable logic controller and/or a computer numeric control of the mechatronic system that is configured as a subscriber network user and as a publisher network user in order to communicate control data (1) and communicates control data (1) present on the machine controller (4) throughout the network (3),
wherein as a publisher network user the machine controller (4) provides control data (1) with a message identifier (7), encodes said control data as a network message (5) by means of the data interchange standard and sends the network message (5) via the network (3), and
as a subscriber network user the machine controller (4) receives a network message (5) intended for the subscriber network user by means of a message identifier (7) via the network (3) and decodes said network message as control data by means of the data interchange standard, and
wherein a drive controller (22) configured as a subscriber network user is present in the mechatronic system and, as a subscriber network user, receives control data (1) from the machine controller (4).

2. Method according to Claim 1, **characterized in that** as a publisher network user the machine controller (4) provides the control data (1) to be encoded and/or the encoded network message (5) and **in that** as a subscriber network user the machine controller (4) provides the received network message (5) and/or the decoded control data (1) in a, in regard to the machine controller (4), static and/or non-temporary and/or global memory area.

3. Method according to Claim 1 or 2, **characterized in that** the encoding and decoding are carried out using methods of the data interchange standard.

4. Method according to one of Claims 1 to 3, **characterized in that** the communication of the control data (1) and/or the type and/or the content and/or the volume of the communicated control data (1) can be configured at runtime and/or remotely and/or in the machine controller (4).

5. Method according to Claim 4, **characterized in that** predetermined communication parameters are automatically prefilled by the machine controller (4) during the configuration.

6. Method according to Claim 4 or 5, **characterized in that** predetermined communication parameters are stipulated during the configuration by external setting, in particular by user inputs, during the configuration.

7. Method according to one of Claims 4 to 6, **characterized in that** the configuration is carried out by way of method calls of the data interchange standard for methods in the machine controller (4).

8. Method according to one of Claims 1 to 7, **characterized in that** the communication of the control data (1) is carried out in real time.

9. Method according to one of Claims 1 to 8, **characterized in that** a quality of service diagnosis (8) of the network message (5) is carried out by a function block of the machine controller (4).

10. Method according to one of Claims 1 to 9, **characterized in that** the encoding (9) and decoding (10) are carried out using a standardized coding format, in particular using Java Script Object Notation, JSON, or Unified Architecture Datagram Packet, UADP.

11. Method according to one of Claims 1 to 10, **characterized in that** an individually callable publisher module (11) configures the machine controller (4) as a publisher network user, provides the control data (1) with the message identifier (7) and encodes said control data as a network message (5) by means of the data interchange standard.

12. Method according to one of Claims 1 to 11, **characterized in that** an individually callable subscriber module (12) configures the machine controller (4) as a subscriber network user and decodes a network message (5) intended for the subscriber network user by means of the message identifier (7) as control data (1) by means of the data interchange standard.

13. Method according to either of Claims 11 and 12, **characterized in that** a network service module (13), in particular one that is individually callable or integrated in another module (11, 12), receives the network message (5) via the network (3) when a machine controller (4) is configured as a subscriber network user, and sends the network message (5) via the network (3) when a machine controller (4) is configured as a publisher network user.

14. Computer program product for a computer device, in particular for a machine controller (4), that, when executed on a computer device (4, 6), carries out a method according to one of Claims 1 to 13.

15. Function block (11, 12, 13) or multiple function blocks of a programmable logic machine controller (4) that is/are configured to carry out a method according to one of Claims 1 to 13.

16. Machine controller (4) comprising one or more function blocks (11, 12, 13) according to Claim 15.

## Revendications

1. Procédé de communication de données de commande de machine (1) d'un système mécatronique (2) dans un réseau (3), avec
au moins un participant au réseau éditeur (4, 6) qui envoie les données de commande (1) sur le réseau (3) en utilisant un standard d'échange de données qui prend en charge un modèle de communication publication/souscription, et
avec au moins un participant au réseau souscripteur (6, 4) qui reçoit les données de commande (1) en utilisant le standard d'échange de données via le réseau (3),
le participant au réseau éditeur effectuant la transmission sous forme de messages réseau (5), dont chacun est destiné à des participants au réseau souscripteur qui peuvent être sélectionnés en fonction des besoins et découplés du participant au réseau éditeur, et
le participant au réseau souscripteur reçoit ou sélectionne sélectivement un message réseau (5) avec ses données de commande (1) à obtenir, chacune étant de préférence fonction d'un événement, et/ou prélève de manière sélective les données de commande (1) à obtenir dans un message réseau (5),
une unité (4) de commande de machine étant intégrée dans le réseau (3) en tant que participant au réseau, qui est apte à être configurée au choix en tant que participant au réseau souscripteur et en tant que participant au réseau éditeur pour la communication des données de commande (1), **caractérisé en ce que**
l'unité (4) de commande de machine est une unité de commande programmable et/ou une unité numérique de commande par ordinateur du système mécatronique, qui est configurée pour communiquer des données de commande (1) en tant que participant au réseau souscripteur et en tant que participant au réseau éditeur, et qui communique des données de commande (1) appliquées à l'unité (4) de commande de machine dans l'ensemble du réseau (3),
l'unité (4) de commande de machine, en tant que participant au réseau éditeur, munit les données de commande (1) d'un identificateur de message (7), les encode en tant que message réseau (5) en utilisant le standard d'échange de données et envoie le message réseau (5) via le réseau (3) et
l'unité (4) de commande de machine reçoit, en tant que participant au réseau souscripteur, via le réseau (3), un message réseau (5) déterminé au moyen d'un identificateur de message (7) pour le participant au réseau souscripteur et le décode en tant que données de commande au moyen du standard d'échange de données, et un régulateur d'entraînement (22) configuré en tant que participant au réseau souscripteur étant présent dans le système mécatronique et recevant, en tant que participant au réseau souscripteur, des données de commande (1) de l'unité (4) de commande de machine.

2. Procédé selon la revendication 1, **caractérisé en ce que** l'unité (4) de commande de machine, en tant que participant au réseau éditeur, fournit les données de commande (1) à encoder et/ou le message réseau (5) encodé, ou **en ce que** l'unité (4) de commande de machine, en tant que participant au réseau souscripteur, fournit le message réseau (5) reçu et/ou les données de commande (1) décodées dans une zone de mémoire statique et/ou non temporaire et/ou globale par rapport à l'unité (4) de commande de machine.

3. Procédé selon la revendication 1 ou la revendication 2, **caractérisé en ce que** l'encodage ou le décodage est effectué en utilisant des méthodes du standard d'échange de données.

4. Procédé selon l'une des revendications 1 à 3, **caractérisé en ce que** la communication des données de commande (1) et/ou du type et/ou du contenu et/ou de l'étendue des données de commande (1) communiquées sont aptes à être configurés en cours d'exécution et/ou à distance et/ou dans l'unité (4) de commande de machine.

5. Procédé selon la revendication 4, **caractérisé en ce que** des paramètres de communication prédéterminés sont automatiquement prédéfinis par l'unité (4) de commande de machine lors de la configuration.

6. Procédé selon la revendication 4 ou la revendication 5, **caractérisé en ce que** des paramètres de communication prédéterminés sont définis lors de la configuration par un réglage externe, notamment par des entrées utilisateur.

7. Procédé selon l'une des revendications 4 à 6, **caractérisé en ce que** la configuration s'effectue par des appels de méthodes du standard d'échange de données de méthodes dans l'unité (4) de commande de machine.

8. Procédé selon l'une des revendications 1 à 7, **caractérisé en ce que** la communication des données de commande (1) est effectuée en temps réel.

9. Procédé selon l'une des revendications 1 à 8, **caractérisé en ce qu'**un diagnostic de qualité de service (8) du message réseau (5) est effectué par un bloc fonctionnel de l'unité (4) de commande de machine.

10. Procédé selon l'une des revendications 1 à 9, **caractérisé en ce que** l'encodage (9) et le décodage (10) sont réalisés en utilisant un format de codage standardisé, notamment avec Java Script Object Notation, JSON, ou Unified Architecture Datagram Packet, UADP.

11. Procédé selon l'une des revendications 1 à 10, **caractérisé en ce qu'**un module éditeur (11) apte à être appelé individuellement configure l'unité (4) de commande de machine en tant que participant au réseau éditeur, munit les données de commande (1) de l'identificateur de message (7) et les encode au moyen du standard d'échange de données en tant que message réseau (5).

12. Procédé selon l'une des revendications 1 à 11, **caractérisé en ce qu'**un module d'abonné (12) apte à être appelé individuellement configure l'unité (4) de commande de machine en tant que participant au réseau souscripteur et décode, en tant que données de commande (1), un message réseau (5) déterminé au moyen de l'identificateur de message (7) pour l'abonné au réseau souscripteur au moyen du standard d'échange de données.

13. Procédé selon l'une des revendications 11 ou 12, **caractérisé en ce qu'**un module (13) de service de réseau, en particulier apte à être appelé individuellement ou intégré dans un autre module (11, 12), reçoit le message réseau (5) via le réseau (3) dans le cas d'une unité (4) de commande de machine configurée en tant que participant au réseau souscripteur, ou envoie via le réseau (3) le message réseau (5) dans le cas d'une unité (4) de commande de machine configurée en tant que participant au réseau éditeur.

14. Produit programme d'ordinateur pour un dispositif informatique, en particulier pour une unité (4) de commande de machine, qui, lorsqu'il est exécuté sur un dispositif informatique (4, 6), met en oeuvre un procédé selon l'une des revendications 1 à 13.

15. Module fonctionnel (11, 12, 13) ou pluralité de modules fonctionnels d'une unité programmable (4) de commande de machine, qui est/sont conçu(s) pour met en oeuvre un procédé selon l'une des revendications 1 à 13.

16. Unité (4) de commande de machine comprenant un ou plusieurs blocs fonctionnels (11, 12, 13) selon la revendication 15.
